(19) Europäisches Patentamt
European Patent Office
Office européen des brevets

(11) **EP 4 757 160 A1**

(12) **EUROPEAN PATENT APPLICATION**

(43) Date of publication:
**10.06.2026 Bulletin 2026/24**

(21) Application number: **25220447.4**

(22) Date of filing: **03.12.2025**

(51) International Patent Classification (IPC):
**H02M 7/483** $^{(2007.01)}$   **H02M 1/00** $^{(2006.01)}$
**H02M 7/5387** $^{(2007.01)}$

(52) Cooperative Patent Classification (CPC):
**H02M 7/4835; H02M 1/0025; H02M 1/12;**
**H02M 7/4833; H02M 7/5395;** H02M 7/53873

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **03.12.2024 US 202463727336 P**

(71) Applicant: **DELTA ELECTRONICS, INC.**
**11491 Taipei (TW)**

(72) Inventors:
• **Wang, Ruxi**
  **Morrisville, NC 27560 (US)**
• **Barbosa, Peter Mantovanelli**
  **320023 Taoyuan City (TW)**
• **Ma, Dihao**
  **Morrisville, NC 27560 (US)**
• **Liu, Jian**
  **Morrisville, NC 27560 (US)**

(74) Representative: **Uexküll & Stolberg**
**Partnerschaft von**
**Patent- und Rechtsanwälten mbB**
**Beselerstraße 4**
**22607 Hamburg (DE)**

(54) **HYBRID MODULAR MULTILEVEL CONVERTER AND CONTROL METHOD THEREOF**

(57)      A hybrid modular multilevel converter (1) is provided. After the voltage difference ($\Delta V$) is added to the original voltage ($V_{CHB,i}$) of each half-bridge submodule (311a, 321a, 331a, 312a, 322a, 332a) or the original voltage ($V_{CFB,j}$) of each full-bridge submodule (311b, 321b, 331b, 312b, 322b, 332b), a compensation voltage ($V'_{CHB,i}$) is obtained. According to a bridge arm current ($i_{arm}$) and a voltage reference value ($V^*_{arm}$), signals of one type of submodules with the compensation voltage ($V'_{CHB,i}$) and signals of the other type of submodules with the original voltages ($V_{CHB,i}$, $V_{CFB,j}$) are sorted. Consequently, an operating sequence of the plurality of half-bridge submodules (311a, 321a, 331a, 312a, 322a, 332a) and the plurality of full-bridge submodules (311b, 321b, 331b, 312b, 322b, 332b) is acquired. The operating modes of the half-bridge submodules (311a, 321a, 331a, 312a, 322a, 332a) and the full-bridge submodules (311b, 321b, 331b, 312b, 322b, 332b) are calculated according to the original voltages ($V_{CHB,i}$) of the half-bridge submodules (311a, 321a, 331a, 312a, 322a, 332a), the original voltages ($V_{CFB,j}$) of the full-bridge submodules (311b, 321b, 331b, 312b, 322b, 332b), the voltage reference value ($V^*_{arm}$) and the operating sequence. A corresponding driving signal is generated to control the half-bridge submodules (311a, 321a, 331a, 312a, 322a, 332a) and the full-bridge submodules (311b, 321b, 331b, 312b, 322b, 332b). Consequently, the voltage difference ($\Delta V$) gradually approaches or equals to 0.

EP 4 757 160 A1

FIG. 1

**Description**

FIELD OF THE INVENTION

The present disclosure relates to a converter, and more particularly to a hybrid modular multilevel converter and a control method of the hybrid modular multilevel converter.

BACKGROUND OF THE INVENTION

As known, conventional modular converters have good scalability and modularity. Consequently, modular converters have been widely used in medium-voltage and high-voltage power conversion systems, e.g., static synchronizing compensators or high-voltage DC transmission systems. A modular converter usually includes multiple submodules (SMs). Furthermore, the modular converter is additionally equipped with a backup module. In case of failure of the modular converter, the backup module can take over operations to improve system reliability through this redundancy design.

The conventional modular converter usually uses single-circuit submodules, e.g., half-bridge submodules (HBSM) or full-bridge submodules (FBSM). Since half-bridge submodules are simple in structure and highly efficient, the half-bridge submodules are often used in modular multilevel converters (MMC). However, half-bridge submodules can only be operated in a buck AC mode. That is, the amplitude of the output AC voltage is lower than a half the amplitude of the DC voltage. In addition, the half-bridge submodule does not have DC fault interruption capability, and the half-bridge submodule needs to be equipped with a large capacitor to suppress the line frequency voltage ripple. Furthermore, although the full-bridge submodule has DC fault interruption capability and polarity reversal capabilities, the full-bridge submodule requires twice the number of power components. In other words, the power loss is higher.

In order to achieve the advantages of both types of submodules, the hybrid modular multilevel converter includes half-bridge submodules and full-bridge submodules. However, in the boost AC operation mode, the half-bridge submodule cannot be turned on during the negative arm voltage period. This leads to uneven energy distribution among the submodules and variations in capacitor voltage ripple. Consequently, the overall stability of the hybrid modular multilevel converter is impaired.

To overcome the drawbacks of the conventional technologies, it is important to provide an improved hybrid modular multilevel converter.

SUMMARY OF THE INVENTION

The present disclosure provides a hybrid modular multilevel converter and a control method of the hybrid modular multilevel converter with enhanced overall stability.

In accordance with an aspect of the present disclosure, a hybrid modular multilevel converter is provided. The hybrid modular multilevel converter includes a plurality of phase bridge arms and a controller. Each phase bridge arm includes an upper bridge arm and a lower bridge arm. In addition, each of the upper bridge arm and the lower bridge arm includes a plurality of half-bridge submodules, a plurality of full-bridge submodules and an inductor, which are connected in series. The controller is configured to control the plurality of phase bridge arms. The controller includes a proportional-integral control unit, an adder, a sorting operator, and a synthesizer. The proportional-integral control unit provides a voltage difference. The voltage difference is correlated with differences between original voltages of the plurality of half-bridge submodules and original voltages of the plurality of full-bridge submodules. After the voltage difference is added to the original voltage of each half-bridge submodule or the original voltage of each full-bridge submodule by the adder, a compensation voltage is obtained. According to a bridge arm current and a voltage reference value, signals of one type of submodules with the compensation voltage and signals of the other type of submodules with the original voltages are sorted by the sorting operator. Consequently, an operating sequence of the plurality of half-bridge submodules and the plurality of full-bridge submodules is acquired. The synthesizer calculates operating modes of the plurality of half-bridge submodules and the plurality of full-bridge submodules according to the original voltages of the plurality of half-bridge submodules, the original voltages of the plurality of full-bridge submodules, the voltage reference value and the operating sequence. In addition, the synthesizer generates a corresponding driving signal to control the plurality of half-bridge submodules and the plurality of full-bridge submodules. Consequently, the voltage difference gradually approaches or equals to 0.

In accordance with another aspect of the present disclosure, a control method for a hybrid modular multilevel converter is provided. The hybrid modular multilevel converter includes a plurality of phase bridge arms. Each phase bridge arm includes an upper bridge arm and a lower bridge arm. Each of the upper bridge arm and the lower bridge arm includes a plurality of half-bridge submodules, a plurality of full-bridge submodules and an inductor in series connection. In a step (a), a voltage difference is provided. The voltage difference is correlated with differences between original voltages of the plurality of half-bridge submodules and original voltages of the plurality of full-bridge submodules. In a step (b), the voltage difference is added to the original voltage of each half-bridge submodule or the original voltage of each full-bridge submodule, so that a compensation voltage is obtained. In a step (c), the signals of one type of submodules with the compensation voltage and the signals of the other type of submodules with the original voltages are sorted according to a bridge arm current and a voltage reference value, so that an operating sequence of the plurality of half-bridge submodules and the plurality of full-bridge submodules is acquired. In a step (d), operating modes of the plurality of half-bridge submodules and the plurality of full-bridge submodules are calculated according to the original voltages of the plurality of half-bridge submodules, the original voltages of the plurality of full-bridge submodules, the voltage reference value and the operating sequence, and a corresponding driving signal is generated to control the plurality of half-bridge submodules and the plurality of full-bridge submodules. Consequently, the voltage difference gradually approaches or equals to 0.

In accordance with another aspect of the present disclosure, a control method for a hybrid modular multilevel converter is provided. The hybrid modular multilevel converter includes a plurality of phase bridge arms. Each phase bridge arm includes an upper bridge arm and a lower bridge arm. Each of the upper bridge arm and the lower bridge arm includes a plurality of half-bridge submodules, a plurality of full-bridge submodules and an inductor in series connection. In a step (a), a voltage difference is provided. The voltage difference is correlated with differences between original voltages of the plurality of half-bridge submodules and original voltages of the plurality of full-bridge submodules. In a step (b), a half-bridge real-time voltage and a full-bridge real-time voltage are generated according to the voltage difference, a voltage reference value and a bridge arm current. In a step (c), a first driving signal is generated to control the plurality of full-bridge submodules according to the full-bridge real-time voltage and the original voltages of the plurality of full-bridge submodules, and a second driving signal is generated to control the plurality of half-bridge submodules according to the half-bridge real-time voltage and the original voltages of the plurality of half-bridge submodules. Consequently, the voltage difference gradually approaches or equals to 0.

The above contents of the present disclosure will become more readily apparent to those ordinarily skilled in the art after reviewing the following detailed description and accompanying drawings, in which:

BRIEF DESCRIPTION OF THE DRAWINGS

FIG. 1 is a schematic circuit diagram illustrating the circuitry topology of a hybrid modular multilevel converter according to an embodiment of the present disclosure;

FIG. 2A is a schematic circuit diagram illustrating a half-bridge submodule of the hybrid modular multilevel converter shown in FIG. 1;

FIG. 2B is a schematic circuit diagram illustrating a full-bridge submodule of the hybrid modular multilevel converter shown in FIG. 1;

FIG. 3 is a schematic circuit block diagram illustrating the detailed circuitry topology of a first exemplary controller of the hybrid modular multilevel converter shown in FIG. 1;

FIG. 4 is a flowchart illustrating the operations of the sorting operator in the controller of the hybrid modular multilevel converter shown in FIG. 1;

FIG. 5 schematically illustrates the computation result of the sorting operator in the controller of the hybrid modular multilevel converter shown in FIG. 1;

FIG. 6 is a schematic timing waveform diagram illustrating associated voltages and currents of the internal components of the hybrid modular multilevel converter shown in FIG. 1;

FIG. 7 is a schematic circuit block diagram illustrating the detailed circuitry topology of a second exemplary controller of the hybrid modular multilevel converter shown in FIG. 1;

FIG. 8 is a schematic circuit block diagram illustrating the detailed circuitry topology of a third exemplary controller of the hybrid modular multilevel converter shown in FIG. 1;

FIG. 9 is a schematic circuit block diagram illustrating the detailed circuitry topology of a fourth exemplary controller of the hybrid modular multilevel converter shown in FIG. 1;

FIGS. 10A, 10B and 10C are schematic timing waveform diagrams illustrating the parameter waveforms of the hybrid modular multilevel converter during three fundamental cycles and under control of the controller shown in FIG. 8 or FIG. 9; and

FIGS. 11A and 11B are schematic timing waveform diagrams illustrating the parameter waveforms of the hybrid modular multilevel converter under control of the controller shown in FIG. 8 or FIG. 9 according to another embodiment of the present disclosure.

DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

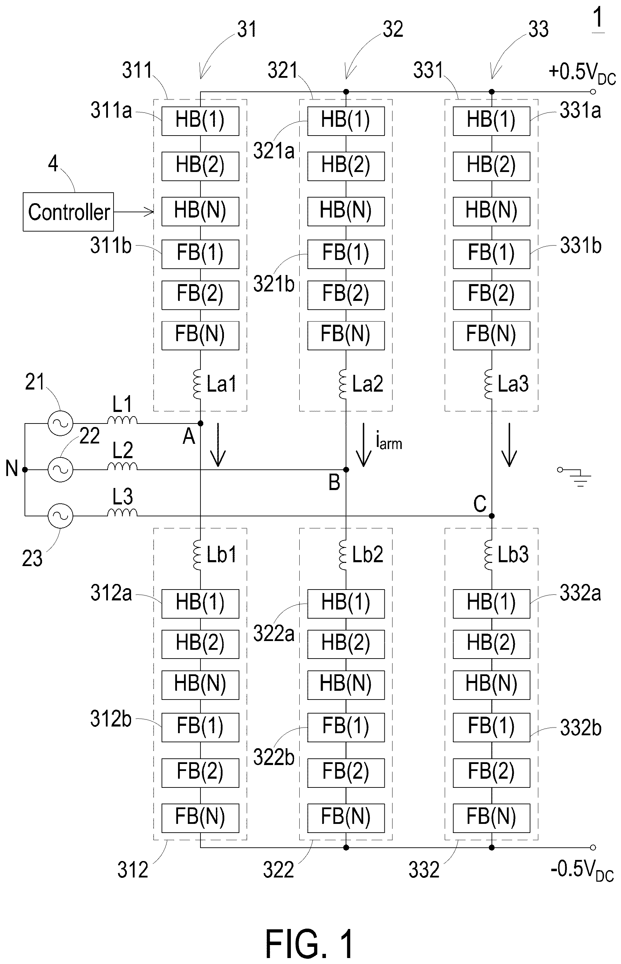

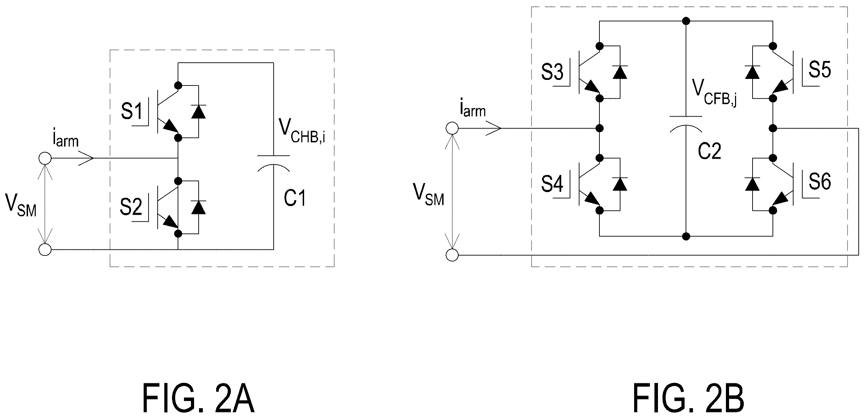

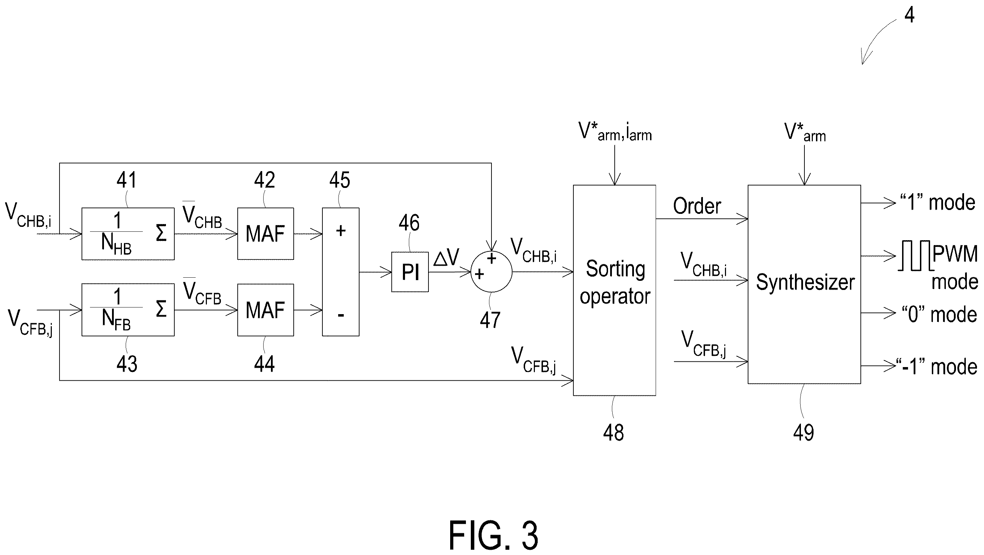

Please refer to FIGS. 1, 2A, 2B and 3. FIG. 1 is a schematic circuit diagram illustrating the circuitry topology of a hybrid modular multilevel converter according to an embodiment of the present disclosure. FIG. 2A is a schematic circuit diagram illustrating a half-bridge submodule of the hybrid modular multilevel converter shown in FIG. 1. FIG. 2B is a schematic circuit diagram illustrating a full-bridge submodule of the hybrid modular multilevel converter shown in FIG. 1. FIG. 3 is a schematic circuit block diagram illustrating the detailed circuitry topology of a first exemplary controller of the hybrid modular multilevel converter shown in FIG. 1.

In an embodiment, the hybrid modular multilevel converter 1 receives three-phase electric energy. The three-phase electric energy includes first-phase electric energy 21, second-phase electric energy 22 and third-phase electric energy 23. The hybrid modular multilevel converter 1 includes three phase bridge arms (i.e., a first-phase bridge arm 31, a second-phase bridge arm 32 and a third-phase bridge arm 33), three main inductors (i.e., a first main inductor L1, a second main inductor L2 and a third main inductor L3), and a controller 4.

The first-phase bridge arm 31 includes a first upper bridge arm 311 and a first lower bridge arm 312. The first upper bridge arm 311 includes a plurality of half-bridge (HB) submodules 311a, a plurality of full-bridge submodules 311b and a first upper inductor La1, which are connected with each other in series. The numbers in parentheses in the HB submodules 311a denote the serial numbers of the corresponding HB submodules 311a. The numbers in parentheses in the full-bridge (FB) submodules 311b denote the serial numbers of the corresponding full-bridge submodules 311b. The submodules below are also labeled in the same way and will not be described in detail. The first lower bridge arm 312 includes a first lower inductor Lb1, a plurality of half-bridge (HB) modules 312a and a plurality of full-bridge (FB) modules 312b, which are connected with each other in series. The connection point between the first upper inductor La1 of the first upper bridge arm 311 and the first lower inductor Lb1 of the first lower bridge arm 312 is a first node A. The first main inductor L1 is electrically connected between the first node A and the first-phase electric energy 21.

The second-phase bridge arm 32 includes a second upper bridge arm 321 and a second lower bridge arm 322. The second upper bridge arm 321 includes a plurality of half-bridge submodules 321a, a plurality of full-bridge submodules 321b and a second upper inductor La2, which are connected with each other in series. The second lower bridge arm 322 includes a second lower inductor Lb2, a plurality of half-bridge submodules 322a and a plurality of full-bridge submodules 322b, which are connected with each other in series. The connection point between the second upper inductor La2 of the second upper bridge arm 321 and the second lower inductor Lb2 of the second lower bridge arm 322 is a second node B. The second main inductor L2 is electrically connected between the second node B and the second-phase electric energy 22.

The third-phase bridge arm 33 includes a third upper bridge arm 331 and a third lower bridge arm 332. The third upper bridge arm 331 includes a plurality of half-bridge submodules 331a, a plurality of full-bridge submodules 331b and a third upper inductor La3, which are connected with each other in series. The third lower bridge arm 332 includes a third lower inductor Lb3, a plurality of half-bridge submodules 332a and a plurality of full-bridge submodules 332b, which are connected with each other in series. The connection point between the third upper inductor La3 of the third upper bridge arm 331 and the third lower inductor Lb3 of the third lower bridge arm 332 is a third node C. The third main inductor L3 is electrically connected between the third node C and the third-phase electric energy 23.

A bridge arm current $i_{arm}$ flows through each of the first-phase bridge arm 31, the second-phase bridge arm 32 and the third-phase bridge arm 33. In an embodiment, the number of the plurality of full-bridge submodules in the first phase arm 31, the second phase arm 32 and the third phase arm 33 is equal to the number of the plurality of half-bridge submodules in the first phase arm 31, the second phase arm 32 and the third phase arm 33, but is not limited thereto.

In an embodiment, each of the half-bridge submodules 311a and 312a in the first-phase bridge arm 31, the half-bridge submodules 321a and 322a in the second-phase bridge arm 32 and the half-bridge submodules 331a and 332a in the third-phase bridge arm 33 has the circuitry topology shown in FIG. 2A. As shown in FIG. 2A, each half-bridge submodule includes two first switches S1, S2 and a first capacitor C1. The two first switches S1 and S2 are connected with each other in series. The first capacitor C1 and the serial connection structure of the two first switches S1 and S2 are connected in parallel. The first capacitor C1 in each half-bridge submodule has an original voltage $V_{CHB,i}$.

In an embodiment, each of the full-bridge submodules 311b and 312b in the first-phase bridge arm 31, the full-bridge submodules 321b and 322b in the second-phase bridge arm 32 and the full-bridge submodules 331b and 332b in the third-phase bridge arm 33 has the circuitry topology shown in FIG. 2B. As shown in FIG. 2B, each full-bridge submodule includes two second switches S3, S4, two third switches S5, S6, and a second capacitor C2. The two second switches S3 and S4 are connected with each other in series. The two third switches S5 and S6 are connected with each other in series. The second capacitor C2, the serial connection structure of the two second switches S3 and S4 and the serial connection structure of the two third switches S5 and S6 are connected in parallel. The second capacitor C2 in each full-bridge submodule has an original voltage $V_{CFB,j}$.

In some embodiments, the capacitance value of the first capacitor C1 and the capacitance value of the second capacitor C2 are different. Of course, the circuitry topology of the half-bridge submodule and the full-bridge submodule may be varied according to the practical requirements.

The controller 4 is connected to the switches of the plurality of half-bridge submodules and the plurality of full-bridge submodules in the first-phase bridge arm 31, the second-phase bridge arm 32 and the third-phase bridge arm 33. In addition, the controller 4 controls the switches of the plurality of half-bridge submodules and the plurality of full-bridge submodules in the first-phase bridge arm 31, the second-phase bridge arm 32 and the third-phase bridge arm 33. In one embodiment, the controller 4 is connected to the switches of the plurality of half-bridge submodules and the plurality of full-bridge submodules in the first-phase bridge arm 31, the second-phase bridge arm 32 and the third-phase bridge arm 33. In addition, the controller 4 controls the switches of the plurality of half-bridge submodules and the plurality of full-bridge submodules in the first-phase bridge arm 31, the second-phase bridge arm 32 and the third-phase bridge arm 33. As shown in FIG. 3, the controller 4 includes a first summer 41, a first filter 42, a second summer 43, a second filter 44, an adder/subtractor 45, a proportional-integral control unit 46, an adder 47, a sorting operator 48, and a synthesizer 49.

The first summer 41 receives the original voltages $V_{CHB,i}$ from the first capacitors C1 of the plurality of half-bridge submodules. After the sum of the original voltages $V_{CHB,i}$ from the first capacitors C1 of the plurality of half-bridge submodules is divided by the number of half-bridge submodules, a first average voltage $\overline{V}_{CHB}$ is obtained.

After the first average voltage $\overline{V}_{CHB}$ from the first summer 41 is filtered by the first filter 42, a first DC component is obtained.

The second summer 43 receives the original voltages $V_{CFB,j}$ from the second capacitors C2 of the plurality of full-bridge submodules. After the sum of the original voltages $V_{CFB,j}$ from the second capacitors C2 of the plurality of full-bridge submodules is divided by the number of full-bridge submodules, a second average voltage $\overline{V}_{CFB}$ is obtained.

After the second average voltage $\overline{V}_{CFB}$ from the second summer 43 is filtered by the second filter 44, a second DC component is obtained.

After the first DC component from the first filter 42 and the second DC component from the second filter 44 are subjected to computation by the adder/subtractor 45, a component difference is obtained.

After the component difference from the adder/subtractor 45 is compensated by the proportional-integral control unit 46, a voltage difference $\Delta V$ is obtained.

After the voltage difference $\Delta V$ is added to the original voltage $V_{CHB,i}$ of each half-bridge submodule by the adder 47, a half-bridge compensation voltage $V'_{CHB,i}$ of each half-bridge submodule is obtained.

The sorting operator 48 has voltage reference value $V^*_{arm}$ associated with the bridge arms. According to the voltage reference value $V^*_{arm}$ and the bridge arm current $i_{arm}$ flowing through each of the first-phase bridge arm 31, the second-phase bridge arm 32 and the third-phase bridge arm 33, the sorting operator 48 sorts the half-bridge compensation voltages $V'_{CHB,i}$ of the plurality of half-bridge submodules and the original voltages $V_{CFB,j}$ from the second capacitors C2 of the corresponding full-bridge submodules. Consequently, the operating sequence of the plurality of half-bridge submodules and the plurality of full-bridge submodules can be acquired. The method of determining the operating sequence will be described as follows.

According to the original voltages $V_{CHB,i}$ from the plurality of half-bridge submodules, the original voltages $V_{CFB,j}$ from the plurality of full-bridge submodules, the voltage reference value $V^*_{arm}$ provided by the sorting operator 48 and the operating sequence, the synthesizer 49 calculates the operating modes of the plurality of half-bridge submodules and the plurality of full-bridge submodules. According to the calculation result, the synthesizer 49 generates a corresponding driving signal to control the plurality of half-bridge submodules and the plurality of full-bridge submodules. Consequently, the voltage difference $\Delta V$ gradually approaches or equals to 0. In other words, the DC components of the voltages of the plurality of half-bridge submodules and the plurality of full-bridge submodules become nearly the same.

Preferably but not exclusively, the synthesizer 49 can calculate four different operating modes.

In a first operating mode, the voltage outputted from the half-bridge submodule (or the full-bridge submodule) is the original voltage, and the operation of the half-bridge submodule (or the full-bridge submodule) is maintained. That is, the first operating mode is the "1" mode.

In a second operating mode, the voltage outputted from the half-bridge submodule (or the full-bridge submodule) is operated in a pulse width modulation (PWM) mode. That is, the second operating mode is the "PWM" mode.

In a third operating mode, the voltage outputted from the half-bridge submodule (or the full-bridge submodule) is zero, and the operation of the half-bridge submodule (or the full-bridge submodule) is bypassed. That is, the third operating mode is the "0" mode.

In a fourth operating mode, the voltage outputted from the half-bridge submodule (or the full-bridge submodule) is the negative value of the original voltage, and the operation of the half-bridge submodule (or the full-bridge submodule) is maintained. That is, the first operating mode is the "-1" mode.

As mentioned above, the hybrid modular multilevel converter 1 has the voltage difference $\Delta V$ In the embodiment, the voltage difference $\Delta V$ is correlated with the differences between the original voltages $V_{CHB,i}$ of the plurality of half-bridge submodules and the original voltages $V_{CFB,j}$ of the plurality of full-bridge submodules. Furthermore, the signals of one type of submodules with the compensation voltages and the signals of the other type of submodules with the original voltages are sorted to obtain the operating sequence of the plurality of half-bridge submodules and the plurality of full-bridge submodules. According to the operating sequence, the plurality of half-bridge submodules and the plurality of full-bridge submodules are controlled. Consequently, the voltage difference $\Delta V$ gradually approaches or equals to 0. In one embodiment, the voltage difference $\Delta V$ is correlated with the differences between the original voltages $V_{CHB,i}$ of the plurality of half-bridge submodules and the original voltages $V_{CFB,j}$ of the plurality of full-bridge submodules. Furthermore, the signals of one type of submodules with the compensation voltages and the signals of the other type of submodules with the original voltages are sorted to obtain the operating sequence of the plurality of half-bridge submodules and the plurality of full-bridge submodules. According to the operating sequence, the plurality of half-bridge submodules and the plurality of full-bridge submodules are controlled. Consequently, the voltage difference $\Delta V$ gradually approaches or equals to 0.

As previously described, the conventional hybrid modular multilevel converters may lead to uneven energy distribution among the submodules. However, according to the hybrid modular multilevel converter 1 of the present disclosure, the energy distribution between the half-bridge submodules and the full-bridge submodules gradually becomes more uniform. Consequently, the variations in capacitor voltage ripples will be reduced, and the capacitor utilization will be increased. In this way, the overall stability of the hybrid modular multilevel converter 1 is enhanced.

In the above embodiment, the adder 47 performs the operation according to the data from the half-bridge submodules. It is noted that numerous modifications may be made while retaining the teachings of the present disclosure. For example, in another embodiment, the adder 47 performs the operation according to the data from the full-bridge submodules. After the voltage difference $\Delta V$ is added to the original voltage $V_{CFB,j}$ of each full-bridge submodule by the adder 47, a full-bridge compensation voltage $V'_{CFB,j}$ of each full-bridge submodule is obtained. According to the voltage reference value $V^*_{arm}$ and the bridge arm current $i_{arm}$ flowing through each of the first-phase bridge arm 31, the second-phase bridge arm 32 and the third-phase bridge arm 33, the sorting operator 48 sorts the full-bridge compensation voltages $V'_{CFB,j}$ of the plurality of full-bridge submodules and the original voltages $V_{CHB,i}$ from the first capacitors C1 of the corresponding half-bridge submodules. Consequently, the operating sequence of the plurality of half-bridge submodules and the plurality of full-bridge submodules can be acquired. The remaining calculation methods are similar to those described above.

For brevity, the calculation data is acquired from the half-bridge submodules by the adder 47, and the subsequent procedures performed by the sorting operator 48 will be described as follow.

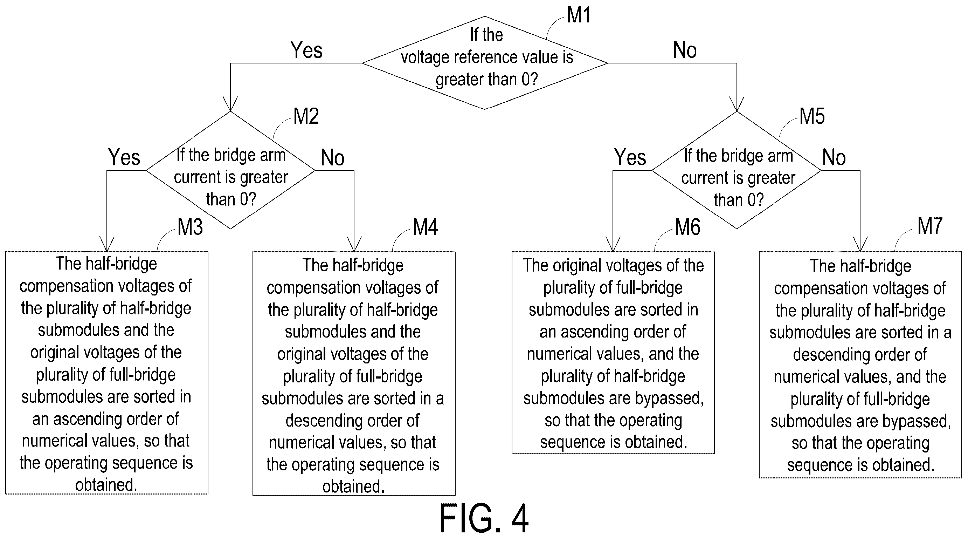

Please refer to FIG. 4 and also refer to FIGS. 1, 2A, 2B and 3. FIG. 4 is a flowchart illustrating the operations of the sorting operator in the controller of the hybrid modular multilevel converter shown in FIG. 1.

Firstly, in step M1, the sorting operator 48 determines whether the voltage reference value $V^*_{arm}$ is greater than 0.

If the determining result of the step M1 indicates that the voltage reference value $V^*_{arm}$ is greater than 0 (i.e., the determining result of the step M1 is satisfied), a step M2 is performed to determine whether the bridge arm current $i_{arm}$ is greater than 0.

If the determining result of the step M2 indicates that the bridge arm current $i_{arm}$ is greater than 0, a step M3 is performed. In the step M3, the sorting operator 48 sorts the half-bridge compensation voltages $V'_{CHB,i}$ of the plurality of half-bridge submodules and the original voltages $V_{CFB,j}$ of the plurality of full-bridge submodules in an ascending order of numerical values. Consequently, the operating sequence is obtained.

If the determining result of the step M2 indicates that the bridge arm current $i_{arm}$ is less than or equal to 0, a step M4 is performed. In the step M4, the sorting operator 48 sorts the half-bridge compensation voltages $V'_{CHB,i}$ of the plurality of half-bridge submodules and the original voltages $V_{CFB,j}$ of the plurality of full-bridge submodules in a descending order of numerical values. Consequently, the operating sequence is obtained.

If the determining result of the step M1 indicates that the voltage reference value $V^*_{arm}$ is less than or equal to 0 (i.e., the determining result of the step M1 is not satisfied), a step M5 is performed to determine whether the bridge arm current $i_{arm}$ is greater than 0.

If the determining result of the step M5 indicates that the bridge arm current $i_{arm}$ is greater than 0, a step M6 is performed. In the step M6, the sorting operator 48 sorts the original voltages $V_{CFB,j}$ of the plurality of full-bridge submodules in an ascending order of numerical values and bypasses the plurality of half-bridge submodules. Consequently, the operating sequence is obtained.

If the determining result of the step M5 indicates that the bridge arm current $i_{arm}$ is less than or equal to 0, a step M7 is performed. In the step M7, the sorting operator 48 sorts the half-bridge compensation voltages $V'_{CHB,i}$ of the plurality of half-bridge submodules in a descending order of numerical values and bypasses the plurality of full-bridge submodules. Consequently, the operating sequence is obtained.

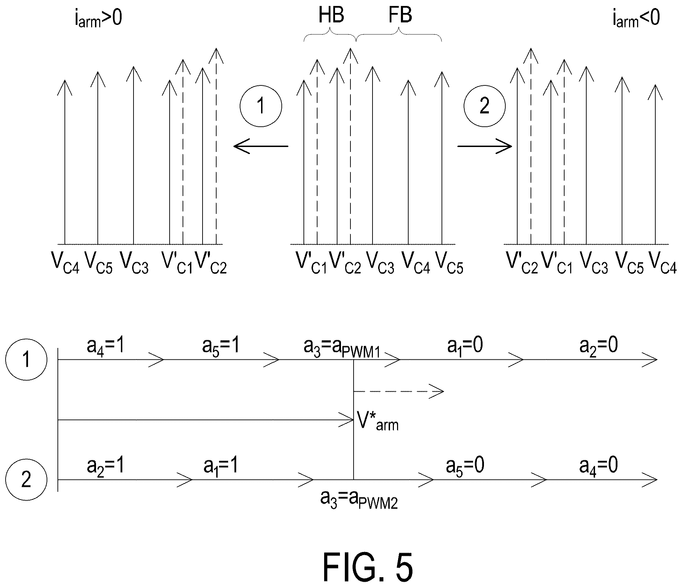

Please refer to FIG. 5 and also refer to FIGS. 1, 2A, 2B, 3 and 4. FIG. 5 schematically illustrates the computation result of the sorting operator in the controller of the hybrid modular multilevel converter shown in FIG. 1. In the implementation example of FIG. 5, two half-bridge submodules (HB) and three full-bridge submodules (FB) are taken as examples for illustration. Each of the two half-bridge submodules has an original voltage $V_{CHB,i}$ and a half-bridge compensation voltage $V'_{CHB,i}$. The original voltage of the half-bridge submodule is represented by a solid line. The half-bridge compensation voltage is represented by a dashed line. In FIG. 5, the half-bridge compensation voltages of the two half-bridge submodules are respectively denoted as $V'_{ci}$ and $V'_{C2}$. Each of the three full-bridge submodules has an original voltage $V_{CFB,j}$, which is represented by a solid line. In FIG. 5, the original voltages of the three full-bridge submodules are respectively denoted as $V_{C3}$, $V_{C4}$ and $V_{C5}$.

In the top and center side of FIG. 5, the unsorted situation of the half-bridge submodules and full-bridge submodules is shown. The voltages are sequentially the half-bridge compensation voltage $V'_{ci}$, the half-bridge compensation voltage $V'_{C2}$, the full-bridge submodule original voltage $V_{C3}$, the full-bridge submodule original voltage $V_{C4}$ and the full-bridge submodule original voltage $V_{C5}$.

In the top and left side of FIG. 5, the sorted result of the half-bridge compensation voltages $V'_{CHB,i}$ and the full-bridge submodule original voltages $V_{CFB,j}$ in the ascending order is shown, in which the voltage reference value $V^*_{arm}$ is greater than 0 and the bridge arm current $i_{arm}$ is greater than 0. The voltages are sequentially the full-bridge submodule original voltage $V_{C4}$, the full-bridge submodule original voltage $V_{C5}$, the full-bridge submodule original voltage $V_{C3}$, the half-bridge compensation voltage $V'_{C1}$ and the half-bridge compensation voltage $V'_{C2}$.

In the top and right side of FIG. 5, the sorted result of the half-bridge compensation voltages $V'_{CHB,i}$ and the full-bridge submodule original voltages $V_{CFB,j}$ in the descending order is shown, in which the voltage reference value $V^*_{arm}$ is greater than 0 and the bridge arm current $i_{arm}$ is less than or equal to 0. The voltages are sequentially the half-bridge compensation voltage $V'_{C2}$, the half-bridge compensation voltage $V'_{C1}$, the full-bridge submodule original voltage $V_{C3}$, the full-bridge submodule original voltage $V_{C5}$ and the full-bridge submodule original voltage $V_{C4}$.

In the upper portion of the bottom side of FIG. 5, the voltage vectors corresponding to the voltages of the top and left side of FIG. 5 are sequentially connected in series. In the lower portion of the bottom side of FIG. 5, the voltage vectors corresponding to the voltages of the top and right side of FIG. 5 are sequentially connected in series.

In the upper portion of the bottom side of FIG. 5, the sorted result of the half-bridge compensation voltages $V'_{CHB,i}$ and the full-bridge submodule original voltages $V_{CFB,j}$ in the ascending order is shown, in which the voltage reference value $V^*_{arm}$ is greater than 0 and the bridge arm current $i_{arm}$ is greater than 0. The full-bridge submodule with the original voltage $V_{C4}$ is operated in the "1" mode. The full-bridge submodule with the original voltage $V_{C5}$ is operated in the "1" mode. The full-bridge submodule with the original voltage $V_{C3}$ is operated in the "PWM" mode. The half-bridge submodule with the half-bridge compensation voltage $V'_{C1}$ is operated in the "0" mode and bypassed. The half-bridge submodule with the half-bridge compensation voltage $V'_{C2}$ is operated in the "0" mode and bypassed.

In the lower portion of the bottom side of FIG. 5, the sorted result of the half-bridge compensation voltages $V'_{CHB,i}$ and the full-bridge submodule original voltages $V_{CFB,j}$ in the descending order is shown, in which the voltage reference value $V^*_{arm}$ is greater than 0 and the bridge arm current $i_{arm}$ is less than or equal to 0. The half-bridge submodule with the half-bridge compensation voltage $V'_{C2}$ is operated in the "1" mode. The half-bridge submodule with the half-bridge compensation voltage $V'_{C1}$ is operated in the "1" mode. The full-bridge submodule with the original voltage $V_{C3}$ is operated in the "PWM" mode. The full-bridge submodule with the original voltage $V_{C5}$ is operated in the "0" mode and bypassed. The full-bridge submodule with the original voltage $V_{C4}$ is operated in the "0" mode and bypassed.

Since the ripple components of the capacitor voltages during the modulation phase are taken into account, the modulation errors will be reduced, and the output accuracy will be increased.

In an implementation example, the operation of the full-bridge submodule shown in FIG. 2B may be described as follows. When the full-bridge submodule is operated in the "1" mode, the second switch S4 and the third switch S5 are turned on. When the full-bridge submodule is operated in the "0" mode and bypassed, the second switch S4 and the third switch S6 or the second switch S3 and the third switch S5 are alternately turned on.

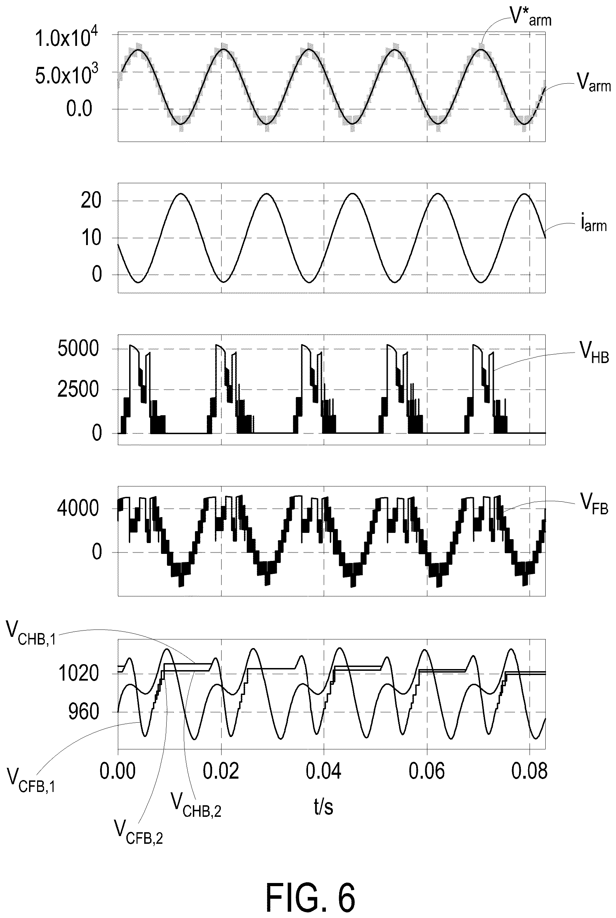

FIG. 6 is a schematic timing waveform diagram illustrating associated voltages and currents of the internal components of the hybrid modular multilevel converter shown in FIG. 1. From top to bottom of FIG. 6, the waveforms of the voltage reference value $V^*_{arm}$ and the output voltage $V_{arm}$ of the hybrid modular multilevel converter, the waveform of the bridge arm current $i_{arm}$, the waveform of the half-bridge submodule output voltage $V_{HB}$, the waveform of the full-bridge submodule output voltage $V_{FB}$, the waveforms of the original voltages $V_{CHB,1}$ and $V_{CHB,2}$, and the waveforms of the original voltages $V_{CFB,1}$ and $V_{CFB,2}$ are sequentially shown.

As mentioned above, the capacitance value of the first capacitor C1 in the half-bridge submodule and the capacitance value of the second capacitor C2 in the full-bridge submodule are different. However, since their DC components are identical, the amplitudes of the ripple components are identical.

In order to reduce the switching frequency of the hybrid modular multilevel converter, the hybrid modular multilevel converter may further include a maintenance factor calculator.

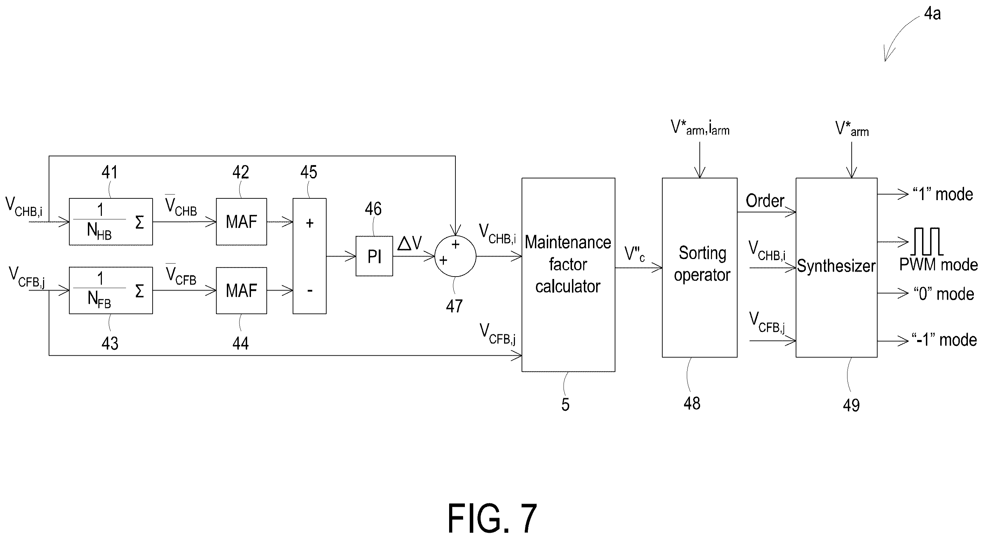

FIG. 7 is a schematic circuit block diagram illustrating the detailed circuitry topology of a second exemplary controller of the hybrid modular multilevel converter shown in FIG. 1. When compared with the controller 4 of FIG. 3, the controller 4a of this embodiment further includes a maintenance factor calculator 5. The maintenance factor calculator 5 has a preset maintenance factor, a voltage upper limit and a voltage lower limit, wherein the maintenance factor is less than 1.

In the embodiment, according to the bridge arm current $i_{arm}$, the voltage upper limit, the voltage lower limit, the compensation voltages $V'_{CHB,i}$ of the plurality of half-bridge submodules and the original voltages $V_{CFB,j}$ of the plurality of full-bridge submodules, the maintenance factor calculator 5 obtains the updated full-bridge voltages of the plurality of full-bridge submodules and the updated half-bridge voltages of the plurality of half-bridge submodules. In FIG. 7, the updated full-bridge voltages and the updated half-bridge voltages are denoted by $V''_C$.

According to the voltage reference value $V^*_{arm}$, the bridge arm current $i_{arm}$ flowing through each of the first-phase bridge arm 31, the second-phase bridge arm 32 and the third-phase bridge arm 33, the updated full-bridge voltages and the updated half-bridge voltages, the sorting operator 48 sorts the half-bridge compensation voltages $V'_{CHB,i}$ of the plurality of half-bridge submodules and the original voltages $V_{CFB,j}$ of the plurality of full-bridge submodules. Consequently, the operating sequence of the plurality of half-bridge submodules and the plurality of full-bridge submodules can be acquired.

The operations of the maintenance factor calculator 5 will be described as follows.

In a first situation, the bridge arm current $i_{arm}$ is greater than 0, the corresponding half-bridge submodule or the corresponding full-bridge submodule is in a maintenance operation in the previous cycle, and the half-bridge compensation voltage $V'_{CHB,i}$ of the corresponding half-bridge submodule or the original voltage $V_{CFB,j}$ of the corresponding full-bridge submodule is less than the voltage upper limit. Under control of the maintenance factor calculator 5, the updated half-bridge voltage $V''c$ of the corresponding half-bridge submodule is adjusted to the multiplication result of the half-bridge compensation voltage $V'_{CHB,i}$ and the maintenance factor, or the updated full-bridge voltage $V''c$ of the corresponding full-bridge submodule is adjusted to the multiplication result of the original voltage $V_{CFB,j}$ of the corresponding full-bridge submodule and the maintenance factor. Since the maintenance factor is less than 0, the updated full-bridge voltage or the updated half-bridge voltage is decreased. Consequently, the corresponding submodule can be operated again in the same cycle.

In a second situation, the bridge arm current $i_{arm}$ is greater than 0, the corresponding half-bridge submodule or the corresponding full-bridge submodule is bypassed in the previous cycle, and the half-bridge compensation voltage $V'_{CHB,i}$ of the corresponding half-bridge submodule or the original voltage $V_{CFB,j}$ of the corresponding full-bridge submodule is greater than the voltage lower limit. Under control of the maintenance factor calculator 5, the updated half-bridge voltage $V''c$ of the corresponding half-bridge submodule is adjusted to the division result of the half-bridge compensation voltage $V'_{CHB,i}$ divided by the maintenance factor, or the updated full-bridge voltage $V''c$ of the corresponding full-bridge submodule is adjusted to the division result of the original voltage $V_{CFB,j}$ of the corresponding full-bridge submodule divided by the maintenance factor. Since the maintenance factor is less than 0, the updated full-bridge voltage or the updated half-bridge voltage is increased. Consequently, the corresponding submodule can be kept bypassed in the same cycle.

In a third situation, the bridge arm current $i_{arm}$ is less than or equal to 0, the corresponding half-bridge submodule or the corresponding full-bridge submodule is in a maintenance operation in the previous cycle, and the half-bridge compensation voltage $V'_{CHB,i}$ of the corresponding half-bridge submodule or the original voltage $V_{CFB,j}$ of the corresponding full-bridge submodule is greater than the voltage lower limit. Under control of the maintenance factor calculator 5, the updated half-bridge voltage $V''c$ of the corresponding half-bridge submodule is adjusted to the division result of the half-bridge compensation voltage $V'_{CHB,i}$ divided by the maintenance factor, or the updated full-bridge voltage $V''c$ of the corresponding full-bridge submodule is adjusted to the division result of the original voltage $V_{CFB,j}$ of the corresponding full-bridge submodule divided by the maintenance factor. Since the maintenance factor is less than 0, the updated full-bridge voltage or the updated half-bridge voltage is decreased. Consequently, the corresponding submodule is possibly operated again in the same cycle.

In a fourth situation, the bridge arm current $i_{arm}$ is less than or equal to 0, the corresponding half-bridge submodule or the corresponding full-bridge submodule is bypassed in the previous cycle, and the half-bridge compensation voltage $V'_{CHB,i}$ of the corresponding half-bridge submodule or the original voltage $V_{CFB,j}$ of the corresponding full-bridge submodule is greater than the voltage lower limit. Under control of the maintenance factor calculator 5, the updated half-bridge voltage $V''c$ of the corresponding half-bridge submodule is adjusted to the multiplication result of the half-bridge compensation voltage $V'_{CHB,i}$ and the maintenance factor, or the updated full-bridge voltage $V''c$ of the corresponding full-bridge submodule is adjusted to the multiplication result of the original voltage $V_{CFB,j}$ of the corresponding full-bridge submodule and the maintenance factor. Since the maintenance factor is less than 0, the updated full-bridge voltage or the updated half-bridge voltage is increased. Consequently, the corresponding submodule can be kept bypassed in the same cycle.

As mentioned above, the submodule is more likely to maintain its original operating state according to the maintenance factor in the maintenance factor calculator 5. Consequently, the overall switching frequency is reduced.

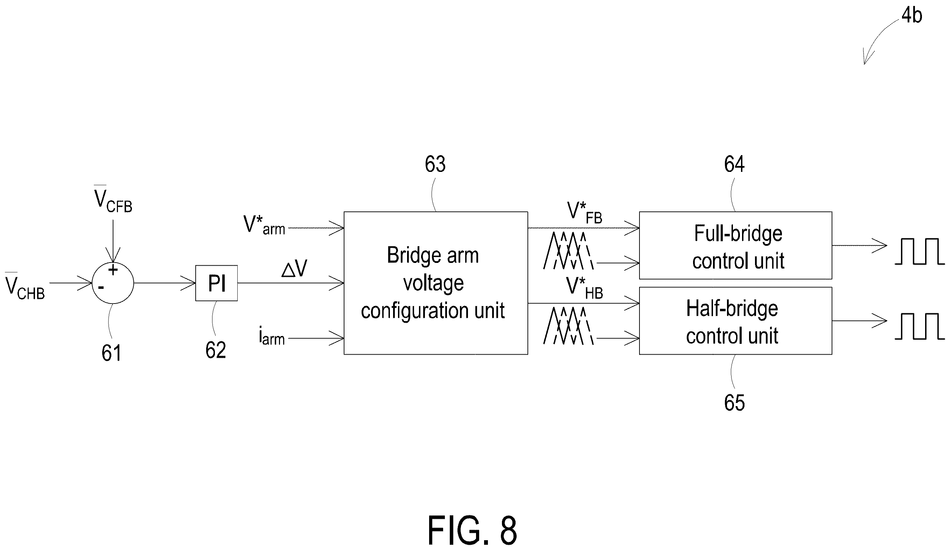

FIG. 8 is a schematic circuit block diagram illustrating the detailed circuitry topology of a third exemplary controller of the hybrid modular multilevel converter shown in FIG. 1. In this embodiment, the controller 4b is implemented according to a carrier modulation control mechanism. The controller 4b includes an adder/subtractor 61, a proportional-integral control unit 62, a bridge arm voltage configuration unit 63, a full-bridge control unit 64, and a half-bridge control unit 65.

The operations of the adder/subtractor 61 are similar to the operations of the adder/subtractor 45 shown in FIG. 3. The adder/subtractor 61 generates a component difference according to the first average voltage $\overline{V}_{CFB}$ and the second average voltage $\overline{V}_{CFB}$. The operations of the proportional-integral control unit 62 are similar to those of the proportional-integral control unit 46 shown in FIG. 3. After the component difference from the adder/subtractor 61 is compensated by the proportional-integral control unit 62, a voltage difference $\Delta V$ is obtained. According to the voltage difference $\Delta V$, the voltage reference value $V^*_{arm}$ and the bridge arm current $i_{arm}$ flowing through each of the first-phase bridge arm 31, the second-phase bridge arm 32 and the third-phase bridge arm 33, the bridge arm voltage configuration unit 63 generates a half-bridge real-time voltage $V^*_{HB}$ and a full-bridge real-time voltage $V^*_{FB}$. The half-bridge real-time voltage $V^*_{HB}$ and the full-bridge real-time voltage $V^*_{FB}$ conform to the following expressions:

$$\begin{cases} V^*_{arm} = V^*_{HB} + V^*_{FB} \\ V^*_{FB} = V^*_{arm}(V^*_{arm} < 0) \\ 0 \le V^*_{HB} \le N_{HB} * V_{CSM} \\ V^*_{FB} \le N_{FB} * V_{CSM} \end{cases}$$

In the above formulae, $N_{HB}$ is the number of the plurality of half-bridge submodules, $N_{FB}$ is the number of the plurality of full-bridge submodules, and $V_{CSM}$ is the corresponding submodule voltage (i.e., the half-bridge compensation voltage $V'_{CHB,i}$ of the corresponding half-bridge submodule or the original voltage $V_{CFB,j}$ of the corresponding full-bridge submodule).

According to the full-bridge real-time voltage $V^*_{FB}$ and the original voltages of the full-bridge submodules, the full-bridge control unit 64 generates the corresponding driving signal to control the plurality of full-bridge submodules. Similarly, according to the half-bridge real-time voltage $V^*_{HB}$ and the original voltages of the half-bridge submodules, the half-bridge control unit 65 generates the corresponding driving signal to control the plurality of half-bridge submodules. Consequently, the voltage difference gradually approaches or equals to 0. Since the controller 4b is used to reduce the capacitor voltage ripples of the corresponding bridge arms, the energy distribution between the half-bridge submodules and the full-bridge submodules gradually becomes more uniform.

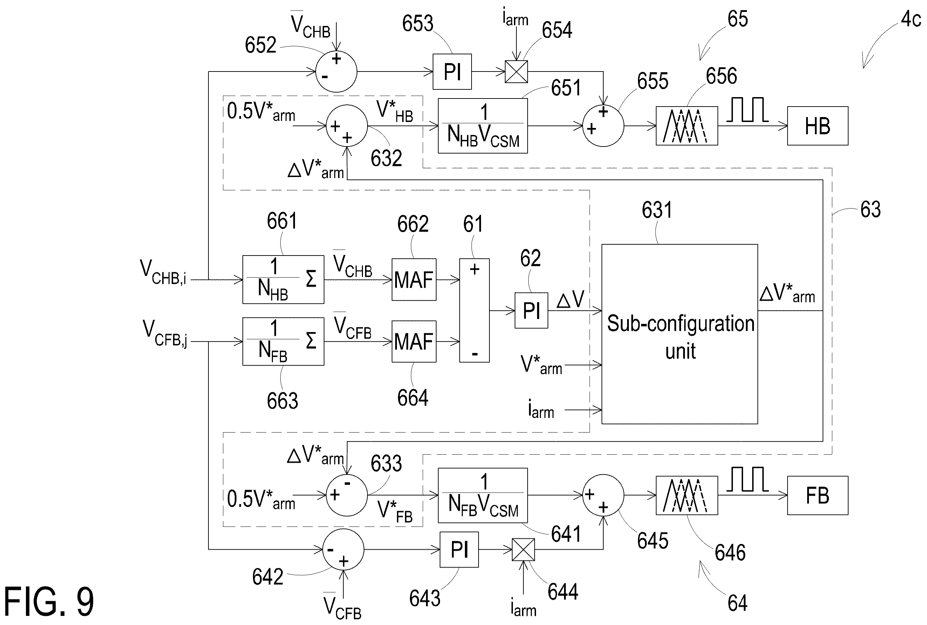

FIG. 9 is a schematic circuit block diagram illustrating the detailed circuitry topology of a fourth exemplary controller of the hybrid modular multilevel converter shown in FIG. 1. When compared with the controller 4b shown in FIG. 8, the controller 4c of this embodiment further includes a first summer 661, a first filter 662, a second summer 663, and a second filter 664. The operations of the first summer 661, the first filter 662, the second summer 663 and the second filter 664 are similar to those of the first summer 41, the first filter 42, the second summer 43 and the second filter 44 shown in FIG. 3.

The bridge arm voltage configuration unit 63 includes a sub-configuration unit 631, a first sub-calculation unit 632, and a second sub-calculation unit 633. According to the voltage difference $\Delta V$, the voltage reference value $V^*_{arm}$ and the bridge arm current $i_{arm}$ flowing through each of the first-phase bridge arm 31, the second-phase bridge arm 32 and the third-phase bridge arm 33, the sub-configuration unit 631 outputs a voltage reference difference $\Delta V^*_{arm}$. After 0.5 times the voltage reference value $V^*_{arm}$ is added to the voltage reference difference $\Delta V^*_{arm}$ by the first sub-calculation unit 632, the half-bridge real-time voltage $V^*_{HB}$ is generated. After the voltage reference difference $\Delta V^*_{arm}$ is subtracted from 0.5 times the voltage reference value $V^*_{arm}$ by the second sub-calculation unit 633, the full-bridge real-time voltage $V^*_{FB}$ is generated.

The full-bridge control unit 64 includes a first divider 641, a third sub-calculation unit 642, a first sub-proportional-integral control unit 643, a first multiplier 644, a fourth sub-calculation unit 645, and a first phase-shift pulse width modulation unit 646. After the full-bridge real-time voltage $V^*_{FB}$ is divided by the number of the plurality of full-bridge submodules and the corresponding submodule voltage by the first divider 641, a first signal is generated. After the original voltages $V_{CFB,j}$ from the second capacitors C2 of the plurality of full-bridge submodules are subtracted from the second average voltage $\overline{V}_{CFB}$ by the third sub-calculation unit 642, the result from the third sub-calculation unit 642 is subjected to a proportional integration by the first sub-proportional-integral control unit 643. After the result from the first sub-proportional-integral control unit 643 is multiplied by the bridge arm current $i_{arm}$, the first multiplier 644 generates a second signal. After the first signal from the first divider 641 and the second signal from the first multiplier 644 are added by the fourth sub-calculation unit 645, a third signal is generated. After a pulse modulation is performed on the third signal by the first phase-shift pulse width modulation unit 646, the corresponding driving signal is generated to control the plurality of full-bridge submodules.

The half-bridge control unit 65 includes a second divider 651, a fifth sub-calculation unit 652, a second sub-proportional-integral control unit 653, a second multiplier 654, a sixth sub-calculation unit 655, and a second phase-shift pulse width modulation unit 656. After the half-bridge real-time voltage $V^*_{HB}$ is divided by the number of the plurality of half-bridge submodules and the corresponding submodule voltage by the second divider 651, a first signal is generated. After the original voltages $V_{CHB,i}$ from the first capacitors C1 of the plurality of half-bridge submodules are subtracted from the first average voltage $\overline{V}_{CFB}$ by the fifth sub-calculation unit 652, the result from the fifth sub-calculation unit 652 is subjected to a proportional integration by the second sub-proportional-integral control unit 653. After the result from the second sub-proportional-integral control unit 653 is multiplied by the bridge arm current $i_{arm}$, the second multiplier 654 generates a second signal. After the first signal from the second divider 651 and the second signal from the second multiplier 654 are added by the sixth sub-calculation unit 655, a third signal is generated. After a pulse modulation is performed on the third signal by the second phase-shift pulse width modulation unit 656, the corresponding driving signal is generated to control the plurality of half-bridge submodules.

In one embodiment, the sorting operator 48 and synthesizer 49 may be implemented as a digital signal processor (DSP), microcontroller unit (MCU) or some other controller capable of executing a firmware routine stored in non-volatile memory. The sorting routine compares all half-bridge compensation voltage $V'_{CHB,i}$ and the original voltages $V_{CFB,j}$ values using a quicksort algorithm, and the synthesizer maps sorted indices to one of four operating modes ("1", "PWM", "0", "-1") based on the voltage reference value $V^*_{arm}$ and the bridge arm current $i_{arm}$, as defined in Table 1 below.

Table 1: Operating Mode Mapping Logic

| Condition | Mode | Output |
|---|---|---|
| V*arm > 0, $i_{arm}$ > 0 | Ascending Sort | Highest V → "1", Lowest V → "0" |
| V*arm ≤ 0, $i_{arm}$ > 0 | FB Only (Asc) | FB: "1"/"PWM", HB: Bypassed |

The maintenance factor calculator 5 is implemented as a state machine with memory registers storing prior submodule states and thresholds (V_upper, V_lower). The maintenance factor $\alpha$ is a preset constant $0.1 \leq \alpha < 1.0$, stored in EEPROM.

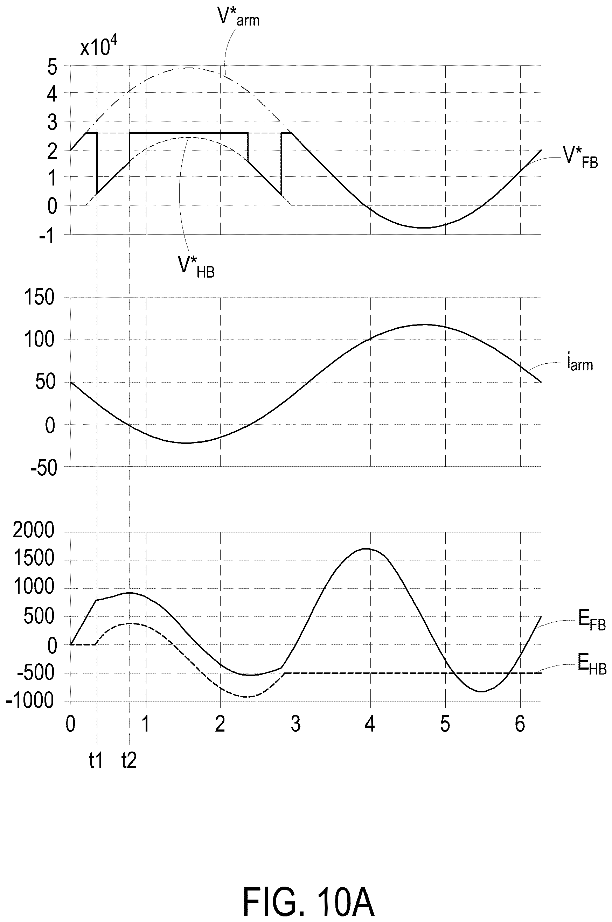

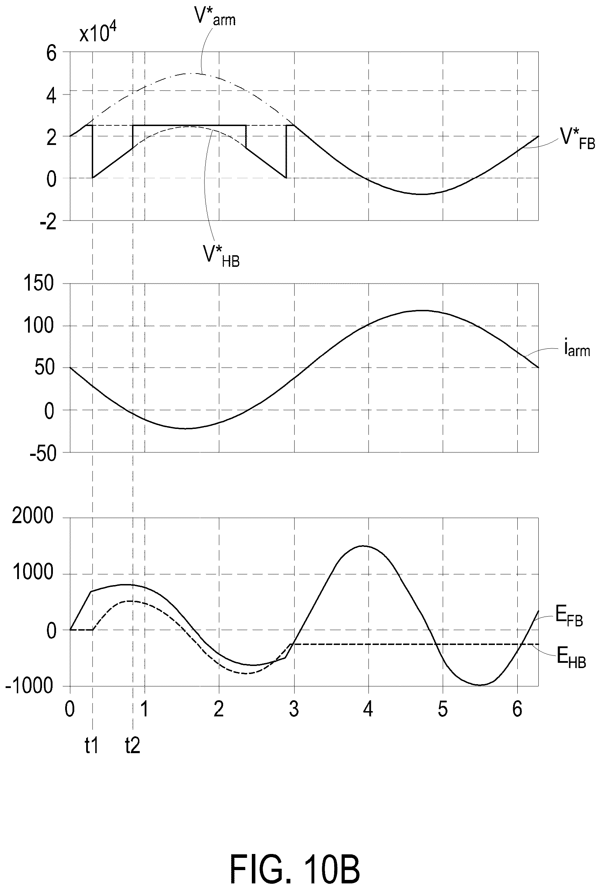

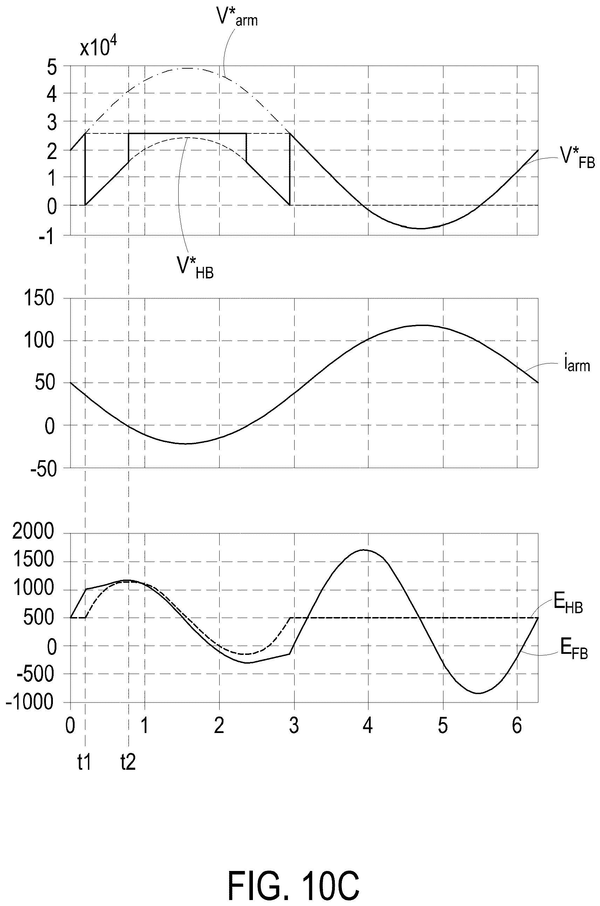

FIGS. 10A, 10B and 10C are schematic timing waveform diagrams illustrating the parameter waveforms of the hybrid modular multilevel converter during three fundamental cycles and under control of the controller shown in FIG. 8 or FIG. 9. In FIGS. 10A, 10B and 10C, the parameter waveforms during the first fundamental cycle, the second fundamental cycle and the third fundamental cycle are respectively shown. In each of the drawings of FIGS. 10A, 10B and 10C, the first waveform diagram is related to the parameter waveforms of the voltage reference value $V^*_{arm}$, the full-bridge real-time voltage $V^*_{FB}$ and the half-bridge real-time voltage $V^*_{HB}$, the second waveform diagram is related to the parameter waveform of the bridge arm current $i_{arm}$, and the third waveform diagram is related to the energy waveforms of the half-bridge submodule and the full-bridge submodule.

Please refer to the first waveform diagram of FIG. 10A. In the time interval between the time point t1 and the time point t2 during the first fundamental cycle, i.e., in the time interval corresponding to the voltage difference ΔV, the full-bridge real-time voltage $V^*_{FB}$ is decreased. That is, the number of full-bridge submodules in operation is reduced, and the voltage required for the voltage reference value $V^*_{arm}$ is distributed to the half-bridge submodules. That is, the number of half-bridge submodules in operation is increased. Please refer to the second waveform diagram of FIG. 10A. In the time interval between the time point t1 and the time point t2, the bridge arm current $i_{arm}$ is in the charging state. Please refer to the third waveform diagram of FIG. 10A. In the time interval between the time point t1 and the time point t2, the bridge arm current $i_{arm}$ in the charging state increases the energy of the half-bridge submodule. Consequently, the energy of the half-bridge submodule approaches the energy of the full-bridge submodule.

Please refer to the first waveform diagram of FIG. 10B. During the second fundamental cycle, the time duration of the time interval between the time point t1 and the time point t2 is extended. That is, the time duration of the time interval corresponding to the voltage difference ΔV is extended. In the third waveform diagram of FIG. 10B, the energy of the half-bridge submodule approaches the energy of the full-bridge submodule more closely when compared with the situation during the first fundamental cycle.

Please refer to the first waveform diagram of FIG. 10C. During the second fundamental cycle, the time duration of the time interval between the time point t1 and the time point t2 is further extended. That is, the time duration of the time interval corresponding to the voltage difference ΔV is further extended. In the third waveform diagram of FIG. 10C, the energy of the half-bridge submodule approaches the energy of the full-bridge submodule more closely when compared with the situation during the second fundamental cycle. That is, the voltage difference between the half-bridge submodule and the full-bridge submodule is nearly 0.

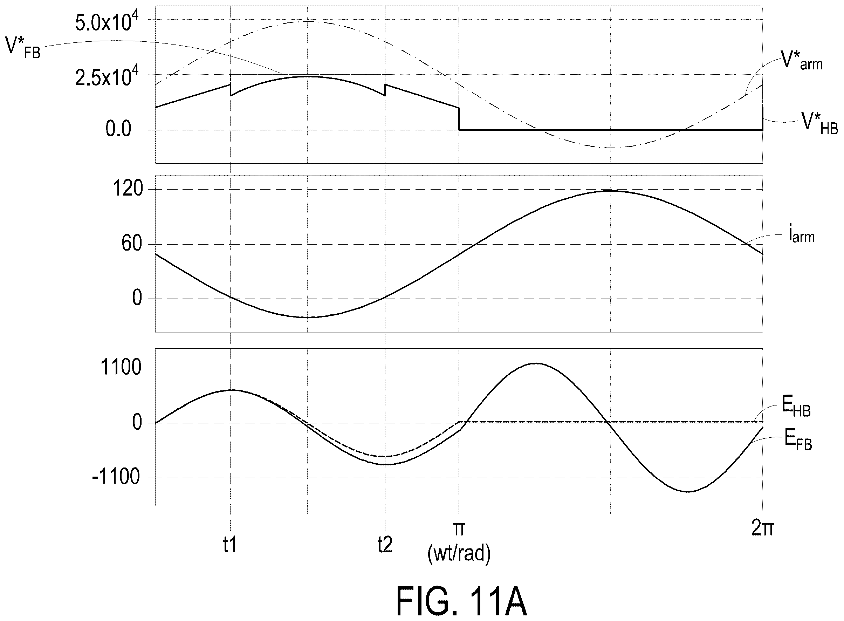

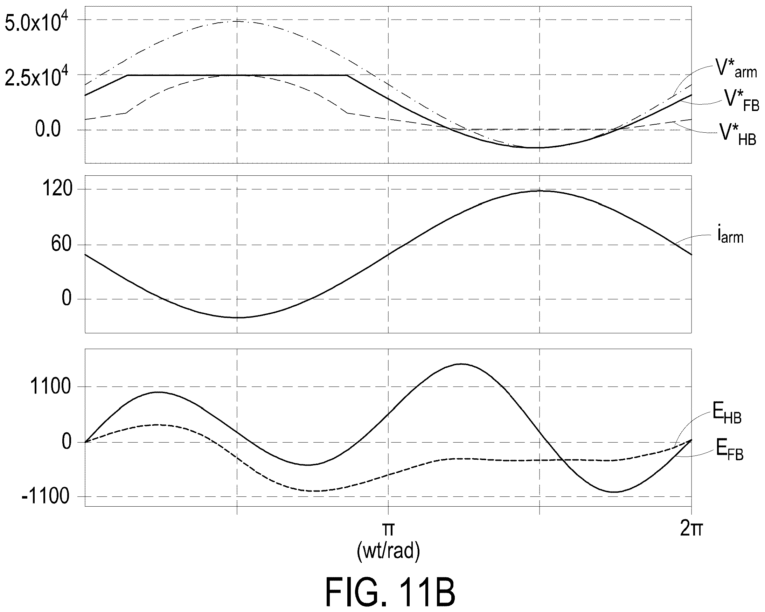

FIGS. 11A and 11B are schematic timing waveform diagrams illustrating the parameter waveforms of the hybrid modular multilevel converter under control of the controller shown in FIG. 8 or FIG. 9 according to another embodiment of the present disclosure. When compared with the parameter waveforms of FIGS. 10A, 10B and 10C, the time duration of the time interval corresponding to the voltage difference $\Delta V$ in the parameter waveforms of FIGS. 11A and 11B is further extended. In addition, the above purpose can be achieved. That is, the voltage difference between the half-bridge submodule and the full-bridge submodule is nearly 0.

In some embodiments, the hybrid modular multilevel converter provides a voltage difference. The voltage difference is correlated with differences between the original voltages of all half-bridge submodules and the original voltages of all full-bridge submodules. The signals of one type of submodules with the compensation voltage and the signals of the other type of submodules with the original voltages are sorted, so that an operating sequence of all half-bridge submodules and all full-bridge submodules is acquired. Consequently, the voltage difference gradually approaches or equals to 0. Alternatively, the controller of the hybrid modular multilevel converter is implemented according to a carrier modulation control mechanism. According to the half-bridge real-time voltage and the full-bridge real-time voltage, the half-bridge submodules and the full-bridge submodules are controlled. Consequently, the voltage difference gradually approaches or equals to 0. In this way, the energy distribution between the half-bridge submodules and the full-bridge submodules gradually becomes more uniform. Consequently, the variations in capacitor voltage ripples will be reduced, the capacitor utilization will be increased, and the overall stability of the hybrid modular multilevel converter will be enhanced.

From the above descriptions, the present disclosure provides the hybrid modular multilevel converter. The hybrid modular multilevel converter has a voltage difference. The voltage difference is correlated with differences between the original voltages of the plurality of half-bridge submodules and the original voltages of the plurality of full-bridge submodules. The signals of one type of submodules with the compensation voltage and the signals of the other type of submodules with the original voltages are sorted, so that an operating sequence of the plurality of half-bridge submodules and the plurality of full-bridge submodules is acquired. Consequently, the voltage difference gradually approaches or equals to 0. Alternatively, the controller of the hybrid modular multilevel converter is implemented according to a carrier modulation control mechanism. According to the half-bridge real-time voltage and the full-bridge real-time voltage, the half-bridge submodules and the full-bridge submodules are controlled. Consequently, the voltage difference gradually approaches or equals to 0. **In** this way, the energy distribution between the half-bridge submodules and the full-bridge submodules gradually becomes more uniform. Consequently, the variations in capacitor voltage ripples will be reduced, the capacitor utilization will be increased, and the overall stability of the hybrid modular multilevel converter will be enhanced.

## Claims

1. A hybrid modular multilevel converter (1), **characterized by** comprising:

   a plurality of phase bridge arms (31, 32, 33), wherein each phase bridge arm (31, 32, 33) comprises an upper bridge arm (311, 321, 331) and a lower bridge arm (312, 322, 332), and each of the upper bridge arm (311, 321, 331) and the lower bridge arm (312, 322, 332) comprises a plurality of half-bridge submodules (311a, 321a, 331a, 312a, 322a, 332a), a plurality of full-bridge submodules (311b, 321b, 331b, 312b, 322b, 332b) and an inductor (La1, La2, La3, Lb1, Lb2, Lb3), which are connected in series; and
   a controller (4, 4a) for controlling the plurality of phase bridge arms (31, 32, 33), wherein the controller (4, 4a) comprises:

   a proportional-integral control unit (46) adapted to provide a voltage difference ($\Delta V$), wherein the voltage difference ($\Delta V$) is correlated with differences between original voltages ($V_{CHB,i}$) of the plurality of half-bridge submodules (311a, 321a, 331a, 312a, 322a, 332a) and original voltages ($V_{CFB,j}$) of the plurality of full-bridge submodules (311b, 321b, 331b, 312b, 322b, 332b);
   an adder (47), wherein after the voltage difference ($\Delta V$) is added to the original voltage ($V_{CHB,i}$) of each half-bridge submodule (311a, 321a, 331a, 312a, 322a, 332a) or the original voltage ($V_{CFB,i}$) of each full-bridge submodule (311b, 321b, 331b, 312b, 322b, 332b) by the adder (47), a compensation voltage ($V'_{CHB,i}$) is obtained;
   a sorting operator (48), wherein according to a bridge arm current ($i_{arm}$) and a voltage reference value (

   $V_{arm}^{*}$ ), signals of one type of submodules with the compensation voltage ($V'_{CHB,i}$) and signals of the other type of submodules with the original voltages ($V_{CHB,i}$, $V_{CFB,j}$) are sorted by the sorting operator (48), so that an operating sequence of the plurality of half-bridge submodules (311a, 321a, 331a, 312a, 322a, 332a) and the plurality of full-bridge submodules (311b, 321b, 331b, 312b, 322b, 332b) is acquired; and

a synthesizer (49) calculating operating modes of the plurality of half-bridge submodules (311a, 321a, 331a, 312a, 322a, 332a) and the plurality of full-bridge submodules (311b, 321b, 331b, 312b, 322b, 332b) according to the original voltages ($V_{CHB,i}$) of the plurality of half-bridge submodules (311a, 321a, 331a, 312a, 322a, 332a), the original voltages ($V_{CFB,j}$) of the plurality of full-bridge submodules (311b, 321b, 331b, 312b, 322b, 332b), the voltage reference value ( $V^*_{arm}$ ) and the operating sequence, and generating a corresponding driving signal to control the plurality of half-bridge submodules (311a, 321a, 331a, 312a, 322a, 332a) and the plurality of full-bridge submodules (311b, 321b, 331b, 312b, 322b, 332b), so that the voltage difference ($\Delta$V) gradually approaches or equals to 0.

2. The hybrid modular multilevel converter (1) according to claim 1, wherein the controller (4, 4a) further comprises:

a first summer (41), wherein after a sum of the original voltages ($V_{CHB,i}$) of the plurality of half-bridge submodules (311a, 321a, 331a, 312a, 322a, 332a) is divided by a number of the plurality of half-bridge submodules (311a, 321a, 331a, 312a, 322a, 332a), a first average voltage ($\overline{V}_{CHB}$) is obtained;

a first filter (42), wherein after the first average voltage ($\overline{V}_{CHB}$) is filtered by the first filter (42), a first DC component is obtained;

a second summer (43), wherein after a sum of the original voltages ($V_{CFB,j}$) of the plurality of full-bridge submodules (311b, 321b, 331b, 312b, 322b, 332b) is divided by a number of the plurality of full-bridge submodules (311b, 321b, 331b, 312b, 322b, 332b), a second average voltage ($\overline{V}_{CFB}$) is obtained;

a second filter (44), wherein after the second average voltage ($\overline{V}_{CFB}$) is filtered by the second filter (44), a second DC component is obtained; and

an adder/subtractor (45) acquiring a component difference according to a computation on the first DC component and the second DC component, wherein after the component difference is compensated by the proportional-integral control unit (46), the voltage difference ($\Delta$V) is obtained.

3. The hybrid modular multilevel converter (1) according to claim 1 or 2, wherein if the voltage reference value ( $V^*_{arm}$ ) is greater than 0 and the bridge arm current ($i_{arm}$) is greater than 0, the sorting operator (48) sorts half-bridge compensation voltages V'$_{CHB,i}$ of the plurality of half-bridge submodules (311a, 321a, 331a, 312a, 322a, 332a) and the original voltages ($V_{CFB,j}$) of the plurality of full-bridge submodules (311b, 321b, 331b, 312b, 322b, 332b) in an ascending order, so that the operating sequence is acquired, wherein if the voltage reference value ( $V^*_{arm}$ ) is greater than 0 and the bridge arm current ($i_{arm}$) is less than or equal to 0, the sorting operator (48) sorts the half-bridge compensation voltages ($V'_{CHB,i}$) of the plurality of half-bridge submodules (311a, 321a, 331a, 312a, 322a, 332a) and the original voltages ($V_{CFB,j}$) of the plurality of full-bridge submodules (311b, 321b, 331b, 312b, 322b, 332b) in a descending order, so that the operating sequence is acquired, wherein if the voltage reference value ( $V^*_{arm}$ ) is less than or equal to 0 and the bridge arm current ($i_{arm}$) is greater than 0, the sorting operator (48) sorts the original voltages ($V_{CFB,j}$) of the plurality of full-bridge submodules (311b, 321b, 331b, 312b, 322b, 332b) in the ascending order, and the plurality of half-bridge submodules (311a, 321a, 331a, 312a, 322a, 332a) are bypassed, so that the operating sequence is acquired, wherein if the voltage reference value ( $V^*_{arm}$ ) is less than or equal to 0 and the bridge arm current ($i_{arm}$) is less than or equal to 0, the sorting operator (48) sorts the half-bridge compensation voltages ($V'_{CHB,i}$) of the plurality of half-bridge submodules (311a, 321a, 331a, 312a, 322a, 332a) in the descending order, and the plurality of full-bridge submodules (311b, 321b, 331b, 312b, 322b, 332b) are bypassed, so that the operating sequence is acquired.

4. The hybrid modular multilevel converter (1) according to any one of the preceding claims, wherein the controller (4a) comprises a maintenance factor calculator (5), and the maintenance factor calculator (5) has a preset maintenance factor, an voltage upper limit and a voltage lower limit, wherein the maintenance factor calculator (5) obtains updated full-bridge voltages ($V''_C$) of the plurality of full-bridge submodules (311b, 321b, 331b, 312b, 322b, 332b) and updated half-bridge voltages ($V''_C$) of the plurality of half-bridge submodules (311a, 321a, 331a, 312a, 322a, 332a) according to the bridge arm current ($i_{arm}$), the voltage upper limit, the voltage lower limit, half-bridge compensation voltages ($V'_{CHB,i}$) of the plurality of half-bridge submodules (311a, 321a, 331a, 312a, 322a, 332a) and the original voltages

($V_{CFB,j}$) of the plurality of full-bridge submodules (311b, 321b, 331b, 312b, 322b, 332b), wherein according to the bridge arm current ($i_{arm}$), the voltage reference value ( $V_{arm}^*$ ), the updated full-bridge voltages ($V''_C$) and the updated half-bridge voltages ($V''_C$), the signals of one type of submodules with the compensation voltage ($V'_{CHB,i}$)and the signals of the other type of submodules with the original voltages ($V_{CHB,i}$, $V_{CFB,j}$ are sorted by the sorting operator (48), so that the operating sequence of the plurality of half-bridge submodules (311a, 321a, 331a, 312a, 322a, 332a) and the plurality of full-bridge submodules (311b, 321b, 331b, 312b, 322b, 332b) is acquired, wherein the maintenance factor is less than 0.

5. The hybrid modular multilevel converter (1) according to claim 4, wherein if the bridge arm current ($i_{arm}$) is greater than 0, the corresponding half-bridge submodule (311a, 321a, 331a, 312a, 322a, 332a) or the corresponding full-bridge submodule (311b, 321b, 331b, 312b, 322b, 332b) is in a maintenance operation in a previous cycle and the half-bridge compensation voltage ($V'_{CHB,i}$) of the corresponding half-bridge submodule (311a, 321a, 331a, 312a, 322a, 332a) or the original voltage ($V_{CFB,j}$) of the corresponding full-bridge submodule (311b, 321b, 331b, 312b, 322b, 332b) is less than the voltage upper limit, the maintenance factor calculator (5) adjusts the updated half-bridge voltage ($V''_C$) of the corresponding half-bridge submodule (311a, 321a, 331a, 312a, 322a, 332a) to a multiplication result of the half-bridge compensation voltage ($V'_{CHB,i}$) and the maintenance factor, or the maintenance factor calculator (5) adjusts the updated full-bridge voltage ($V''_C$) of the corresponding full-bridge submodule (311b, 321b, 331b, 312b, 322b, 332b) to a multiplication result of the original voltage ($V_{CFB,j}$) of the corresponding full-bridge submodule (311b, 321b, 331b, 312b, 322b, 332b) and the maintenance factor, wherein if the bridge arm current ($i_{arm}$) is greater than 0, the corresponding half-bridge submodule (311a, 321a, 331a, 312a, 322a, 332a) or the corresponding full-bridge submodule (311b, 321b, 331b, 312b, 322b, 332b) is bypassed in the previous cycle and the half-bridge compensation voltage ($V'_{CHB,i}$) of the corresponding half-bridge submodule (311a, 321a, 331a, 312a, 322a, 332a) or the original voltage ($V_{CFB,j}$) of the corresponding full-bridge submodule (311b, 321b, 331b, 312b, 322b, 332b) is greater than the voltage lower limit, the maintenance factor calculator (5) adjusts the updated half-bridge voltage of the corresponding half-bridge submodule (311a, 321a, 331a, 312a, 322a, 332a) to a division result of the half-bridge compensation voltage ($V'_{CHB,i}$) divided by the maintenance factor, or the maintenance factor calculator (5) adjusts the updated full-bridge voltage of the corresponding full-bridge submodule (311b, 321b, 331b, 312b, 322b, 332b) to a division result of the original voltage ($V_{CFB,j}$) of the corresponding full-bridge submodule (311b, 321b, 331b, 312b, 322b, 332b) divided by the maintenance factor, wherein if the bridge arm current ($i_{arm}$) is less than or equal to 0, the corresponding half-bridge submodule (311a, 321a, 331a, 312a, 322a, 332a) or the corresponding full-bridge submodule (311b, 321b, 331b, 312b, 322b, 332b) is in the maintenance operation in the previous cycle and the half-bridge compensation voltage ($V'_{CHB,i}$) of the corresponding half-bridge submodule (311a, 321a, 331a, 312a, 322a, 332a) or the original voltage ($V_{CFB,j}$) of the corresponding full-bridge submodule (311b, 321b, 331b, 312b, 322b, 332b) is greater than the voltage lower limit, the maintenance factor calculator (5) adjusts the updated half-bridge voltage ($V''_C$) of the corresponding half-bridge submodule (311a, 321a, 331a, 312a, 322a, 332a) to the division result of the half-bridge compensation voltage ($V'_{CHB,i}$) divided by the maintenance factor, or the maintenance factor calculator (5) adjusts the updated full-bridge voltage ($V''_C$) of the corresponding full-bridge submodule (311b, 321b, 331b, 312b, 322b, 332b) to the division result of the original voltage ($V_{CFB,j}$) of the corresponding full-bridge submodule (311b, 321b, 331b, 312b, 322b, 332b) divided by the maintenance factor, wherein if the bridge arm current ($i_{arm}$) is less than or equal to 0, the corresponding half-bridge submodule (311a, 321a, 331a, 312a, 322a, 332a) or the corresponding full-bridge submodule (311b, 321b, 331b, 312b, 322b, 332b) is bypassed in the previous cycle and the half-bridge compensation voltage ($V'_{CHB,i}$) of the corresponding half-bridge submodule (311a, 321a, 331a, 312a, 322a, 332a) or the original voltage ($V_{CFB,j}$) of the corresponding full-bridge submodule (311b, 321b, 331b, 312b, 322b, 332b) is greater than the voltage lower limit, the maintenance factor calculator (5) adjusts the updated half-bridge voltage ($V''_C$) of the corresponding half-bridge submodule (311a, 321a, 331a, 312a, 322a, 332a) to the multiplication result of the half-bridge compensation voltage ($V'_{CHB,i}$) and the maintenance factor, or the maintenance factor calculator (5) adjusts the updated full-bridge voltage ($V''_C$) of the corresponding full-bridge submodule (311b, 321b, 331b, 312b, 322b, 332b) to the multiplication result of the original voltage ($V_{CFB,j}$) of the corresponding full-bridge submodule (311b, 321b, 331b, 312b, 322b, 332b) and the maintenance factor.

6. The hybrid modular multilevel converter (1) according to any one of the preceding claims, wherein each half-bridge submodule (311a, 321a, 331a, 312a, 322a, 332a) comprises two first switches (S1, S2) and a first capacitor (C1), and each full-bridge submodule (311b, 321b, 331b, 312b, 322b, 332b) comprises two second switches (S3, S4), two third switches (S5, S6) and a second capacitor (C2), wherein the two first switches (S1, S2) are connected with each other in series, and the first capacitor (C1) and a serial connection structure of the two first switches (S1, S2) are connected in parallel, wherein the two second switches (S3, S4) are connected with each other in series, the two third switches (S5, S6) are connected with each other in series, and second capacitor (C2), a serial connection structure of the two second switches (S3, S4) and a serial connection structure of the two third switches (S5, S6) are connected in parallel.

7.  The hybrid modular multilevel converter (1) according to claim 6, wherein a capacitance value of the first capacitor (C1) and a capacitance value of the second capacitor (C2) are different.

8.  The hybrid modular multilevel converter (1) according to any one of the preceding claims, wherein a number of the plurality of full-bridge submodules (311b, 321b, 331b, 312b, 322b, 332b) and a number of the plurality of half-bridge submodules (311a, 321a, 331a, 312a, 322a, 332a) are equal.

9.  A control method for a hybrid modular multilevel converter (1), the hybrid modular multilevel converter (1) comprising a plurality of phase bridge arms (31, 32, 33), each phase bridge arm (31, 32, 33) comprising an upper bridge arm (311, 321, 331) and a lower bridge arm (312, 322, 332), each of the upper bridge arm (311, 321, 331) and the lower bridge arm (312, 322, 332) comprising a plurality of half-bridge submodules (311a, 321a, 331a, 312a, 322a, 332a), a plurality of full-bridge submodules (311b, 321b, 331b, 312b, 322b, 332b) and an inductor (La1, La2, La3, Lb1, Lb2, Lb3) in series connection, **characterized in that** the control method comprises steps of:

(a) providing a voltage difference ($\Delta V$), wherein the voltage difference *($\Delta V$)* is correlated with differences between original voltages ($V_{CHB,i}$) of the plurality of half-bridge submodules (311a, 321a, 331a, 312a, 322a, 332a) and original voltages ($V_{CFB,j}$) of the plurality of full-bridge submodules (311b, 321b, 331b, 312b, 322b, 332b);

(b) adding the voltage difference ($\Delta V$) to the original voltage ($V_{CHB,i}$) of each half-bridge submodule (311a, 321a, 331a, 312a, 322a, 332a) or the original voltage ($V_{CFB,j}$) of each full-bridge submodule (311b, 321b, 331b, 312b, 322b, 332b), thereby obtaining a compensation voltage ($V'_{CHB,i}$);

(c) allowing signals of one type of submodules with the compensation voltage ($V'_{CHB,i}$) and signals of the other type of submodules with the original voltages ($V_{CHB,i}$, $V_{CFB,j}$) to be sorted according to a bridge arm current ($i_{arm}$) and a voltage reference value ( $V^*_{arm}$ ), thereby acquiring an operating sequence of the plurality of half-bridge submodules (311a, 321a, 331a, 312a, 322a, 332a) and the plurality of full-bridge submodules (311b, 321b, 331b, 312b, 322b, 332b); and

(d) calculating operating modes of the plurality of half-bridge submodules (311a, 321a, 331a, 312a, 322a, 332a) and the plurality of full-bridge submodules (311b, 321b, 331b, 312b, 322b, 332b) according to the original voltages ($V_{CHB,i}$) of the plurality of half-bridge submodules (311a, 321a, 331a, 312a, 322a, 332a), the original voltages ($V_{CFB,j}$) of the plurality of full-bridge submodules (311b, 321b, 331b, 312b, 322b, 332b), the voltage reference value ( $V^*_{arm}$ ) and the operating sequence, and generating a corresponding driving signal to control the plurality of half-bridge submodules (311a, 321a, 331a, 312a, 322a, 332a) and the plurality of full-bridge submodules (311b, 321b, 331b, 312b, 322b, 332b), so that the voltage difference ($\Delta V$) gradually approaches or equals to 0.

10. The control method according to claim 9, wherein if the voltage reference value ( $V^*_{arm}$ ) is greater than 0 and the bridge arm current ($i_{arm}$) is greater than 0 in the step (c), half-bridge compensation voltages ($V'_{CHB,i}$) of the plurality of half-bridge submodules (311a, 321a, 331a, 312a, 322a, 332a) and the original voltages ($V_{CFB,j}$) of the plurality of full-bridge submodules (311b, 321b, 331b, 312b, 322b, 332b) are sorted in an ascending order, so that the operating sequence is acquired, wherein if the voltage reference value ( $V^*_{arm}$ ) is greater than 0 and the bridge arm current ($i_{arm}$) is less than or equal to 0 in the step (c), the half-bridge compensation voltages ($V'_{CHB,i}$) of the plurality of half-bridge submodules (311a, 321a, 331a, 312a, 322a, 332a) and the original voltages ($V_{CFB,j}$) of the plurality of full-bridge submodules (311b, 321b, 331b, 312b, 322b, 332b) are sorted in a descending order, so that the operating sequence is acquired, wherein if the voltage reference value ( $V^*_{arm}$ ) is less than or equal to 0 and the bridge arm current ($i_{arm}$) is greater than 0 in the step (c), the original voltages ($V_{CFB,j}$) of the plurality of full-bridge submodules (311b, 321b, 331b, 312b, 322b, 332b) are sorted in the ascending order, and the plurality of half-bridge submodules (311a, 321a, 331a, 312a, 322a, 332a) are bypassed, so that the operating sequence is acquired, wherein if the voltage reference value ( $V^*_{arm}$ ) is less than or equal to 0 and the bridge arm current ($i_{arm}$) is less than or equal to 0 in the step (c), the half-bridge compensation voltages ($V'_{CHB,i}$) of the plurality of half-bridge submodules (311a, 321a, 331a, 312a, 322a, 332a) are sorted in the descending order, and the plurality of full-bridge submodules (311b, 321b, 331b, 312b, 322b, 332b) are bypassed, so that the operating sequence is acquired.

11. The control method according to claim 9 or 10, wherein the step (c) further comprises steps of:

(c1) obtaining updated full-bridge voltages ($V''_C$) of the plurality of full-bridge submodules (311b, 321b, 331b, 312b, 322b, 332b) and updated half-bridge voltages ($V''_C$) of the plurality of half-bridge submodules (311a, 321a, 331a, 312a, 322a, 332a) according to the bridge arm current ($i_{arm}$), a voltage upper limit, a voltage lower limit, half-bridge compensation voltages ($V'_{CHB,i}$) of the plurality of half-bridge submodules (311a, 321a, 331a, 312a, 322a, 332a) and the original voltages ($V_{CFB,j}$) of the plurality of full-bridge submodules (311b, 321b, 331b, 312b, 322b, 332b); and

(c2) adjusting the updated full-bridge voltage ($V''_C$) of the corresponding full-bridge submodule (311b, 321b, 331b, 312b, 322b, 332b) or the updated half-bridge voltage ($V''_C$) of the corresponding half-bridge submodule (311a, 321a, 331a, 312a, 322a, 332a),

wherein if the bridge arm current ($i_{arm}$) is greater than 0, the corresponding half-bridge submodule (311a, 321a, 331a, 312a, 322a, 332a) or the corresponding full-bridge submodule (311b, 321b, 331b, 312b, 322b, 332b) is in a maintenance operation in a previous cycle and the half-bridge compensation voltage ($V'_{CHB,i}$) of the corresponding half-bridge submodule (311a, 321a, 331a, 312a, 322a, 332a) or the original voltage ($V_{CFB,j}$) of the corresponding full-bridge submodule (311b, 321b, 331b, 312b, 322b, 332b) is less than the voltage upper limit, the updated half-bridge voltage ($V''_C$) of the corresponding half-bridge submodule (311a, 321a, 331a, 312a, 322a, 332a) is adjusted to a multiplication result of the half-bridge compensation voltage ($V'_{CHB,i}$) and the maintenance factor, or the updated full-bridge voltage ($V''_C$) of the corresponding full-bridge submodule (311b, 321b, 331b, 312b, 322b, 332b) is adjusted to a multiplication result of the original voltage ($V_{CFB,j}$) of the corresponding full-bridge submodule (311b, 321b, 331b, 312b, 322b, 332b) and the maintenance factor,

wherein if the bridge arm current ($i_{arm}$) is greater than 0, the corresponding half-bridge submodule (311a, 321a, 331a, 312a, 322a, 332a) or the corresponding full-bridge submodule (311b, 321b, 331b, 312b, 322b, 332b) is bypassed in the previous cycle and the half-bridge compensation voltage ($V'_{CHB,i}$) of the corresponding half-bridge submodule (311a, 321a, 331a, 312a, 322a, 332a) or the original voltage ($V_{CFB,j}$) of the corresponding full-bridge submodule (311b, 321b, 331b, 312b, 322b, 332b) is greater than the voltage lower limit, the updated half-bridge voltage ($V''_C$) of the corresponding half-bridge submodule (311a, 321a, 331a, 312a, 322a, 332a) is adjusted to a division result of the half-bridge compensation voltage ($V'_{CHB,i}$) divided by the maintenance factor, or the updated full-bridge voltage ($V''_C$) of the corresponding full-bridge submodule (311b, 321b, 331b, 312b, 322b, 332b) is adjusted to a division result of the original voltage ($V_{CFB,j}$) of the corresponding full-bridge submodule (311b, 321b, 331b, 312b, 322b, 332b) divided by the maintenance factor,

wherein if the bridge arm current ($i_{arm}$) is less than or equal to 0, the corresponding half-bridge submodule (311a, 321a, 331a, 312a, 322a, 332a) or the corresponding full-bridge submodule (311b, 321b, 331b, 312b, 322b, 332b) is in the maintenance operation in the previous cycle and the half-bridge compensation voltage ($V'_{CHB,i}$) of the corresponding half-bridge submodule (311a, 321a, 331a, 312a, 322a, 332a) or the original voltage ($V_{CFB,j}$) of the corresponding full-bridge submodule (311b, 321b, 331b, 312b, 322b, 332b) is greater than the voltage lower limit, the updated half-bridge voltage ($V''_C$) of the corresponding half-bridge submodule (311a, 321a, 331a, 312a, 322a, 332a) is adjusted to the division result of the half-bridge compensation voltage ($V'_{CHB,i}$) divided by the maintenance factor, or the updated full-bridge voltage ($V''_C$) of the corresponding full-bridge submodule (311b, 321b, 331b, 312b, 322b, 332b) is adjusted to the division result of the original voltage ($V_{CFB,j}$) of the corresponding full-bridge submodule (311b, 321b, 331b, 312b, 322b, 332b) divided by the maintenance factor,

wherein if the bridge arm current ($i_{arm}$) is less than or equal to 0, the corresponding half-bridge submodule (311a, 321a, 331a, 312a, 322a, 332a) or the corresponding full-bridge submodule (311b, 321b, 331b, 312b, 322b, 332b) is bypassed in the previous cycle and the half-bridge compensation voltage ($V'_{CHB,i}$) of the corresponding half-bridge submodule (311a, 321a, 331a, 312a, 322a, 332a) or the original voltage ($V_{CFB,j}$) of the corresponding full-bridge submodule (311b, 321b, 331b, 312b, 322b, 332b) is greater than the voltage lower limit, the updated half-bridge voltage ($V''_C$) of the corresponding half-bridge submodule (311a, 321a, 331a, 312a, 322a, 332a) is adjusted to the multiplication result of the half-bridge compensation voltage ($V'_{CHB,i}$) and the maintenance factor, or the updated full-bridge voltage ($V''_C$) of the corresponding full-bridge submodule (311b, 321b, 331b, 312b, 322b, 332b) is adjusted to the multiplication result of the original voltage ($V_{CFB,j}$) of the corresponding full-bridge submodule (311b, 321b, 331b, 312b, 322b, 332b) and the maintenance factor.

12. A control method for a hybrid modular multilevel converter (1), the hybrid modular multilevel converter (1) comprising a plurality of phase bridge arms (31, 32, 33), each phase bridge arm (31, 32, 33) comprising an upper bridge arm (311, 321, 331) and a bridge arm, each of the upper bridge arm (311, 321, 331) and the lower bridge arm (312, 322, 332) comprising a plurality of half-bridge submodules (311a, 321a, 331a, 312a, 322a, 332a), a plurality of full-bridge submodules (311b, 321b, 331b, 312b, 322b, 332b) and an inductor (La1, La2, La3, Lb1, Lb2, Lb3) in series connection, **characterized in that** the control method comprises steps of:

(a) providing a voltage difference ($\Delta V$), wherein the voltage difference *($\Delta V$)* is correlated with differences between original voltages ($V_{CHB,i}$) of the plurality of half-bridge submodules (311a, 321a, 331a, 312a, 322a, 332a) and original voltages ($V_{CFB,j}$) of the plurality of full-bridge submodules (311b, 321b, 331b, 312b, 322b, 332b);

(b) generating a half-bridge real-time voltage ($V^*_{HB}$) and a full-bridge real-time voltage ($V^*_{FB}$) according to the voltage difference ($\Delta V$), a voltage reference value ( $V^*_{arm}$ ) and a bridge arm current ($i_{arm}$); and

(c) generating a first driving signal to control the plurality of full-bridge submodules (311b, 321b, 331b, 312b, 322b, 332b) according to the full-bridge real-time voltage ($V^*_{FB}$) and the original voltages ($V_{CFB,j}$) of the plurality of full-bridge submodules (311b, 321b, 331b, 312b, 322b, 332b), and generating a second driving signal to control the plurality of half-bridge submodules (311a, 321a, 331a, 312a, 322a, 332a) according to the half-bridge real-time voltage ($V^*_{HB}$) and the original voltages ($V_{CHB,i}$) of the plurality of half-bridge submodules (311a, 321a, 331a, 312a, 322a, 332a), so that the voltage difference ($\Delta V$) gradually approaches or equals to 0.

13. The control method according to claim 12, wherein in the step (b), half-bridge real-time voltage ($V^*_{HB}$) and the full-bridge real-time voltage ($V^*_{FB}$) conform to following expressions:

$$\begin{cases} V^*_{arm} = V^*_{HB} + V^*_{FB} \\ V^*_{FB} = V^*_{arm} (V^*_{arm} < 0) \\ 0 \leq V^*_{HB} \leq N_{HB} * V_{CSM} \\ V^*_{FB} \leq N_{FB} * V_{CSM} \end{cases}$$

wherein $V^*_{arm}$ is the voltage reference value ( $V^*_{arm}$ ), $V^*_{FB}$ is the full-bridge real-time voltage ($V^*_{FB}$), $N_{HB}$ is a number of the plurality of half-bridge submodules (311a, 321a, 331a, 312a, 322a, 332a), $N_{FB}$ is a number of the plurality of full-bridge submodules (311b, 321b, 331b, 312b, 322b, 332b), and $V_{CSM}$ is a corresponding submodule voltage.

14. The control method according to claim 12 or 13, wherein the step (b) further comprises steps of:

(b1) generating a voltage reference difference according to the voltage difference ($\Delta V$), the voltage reference value ( $V^*_{arm}$ ) and the bridge arm current ($i_{arm}$);

(b2) adding 0.5 times the voltage reference value ( $V^*_{arm}$ ) to the voltage reference difference, thereby obtaining the half-bridge real-time voltage ($V^*_{HB}$); and

(b3) subtracting 0.5 times the voltage reference value ( $V^*_{arm}$ ) from the voltage reference difference, thereby obtaining the full-bridge real-time voltage ($V^*_{FB}$).

15. The control method according to any one of claims 12 to 14, wherein the step (c) further comprises steps of:

(c1) dividing the full-bridge real-time voltage ($V^*_{FB}$) by a number of the plurality of full-bridge submodules (311b, 321b, 331b, 312b, 322b, 332b) and a corresponding submodule voltage, thereby generating a first signal;

(c2) subtracting the original voltages ($V_{CFB,j}$) of the plurality of full-bridge submodules (311b, 321b, 331b, 312b, 322b, 332b) from a second average voltage ($\overline{V}_{CFB}$) so as to obtain a first result, performing a proportional integration on the first result so as to obtain a second result, and multiplying the second result by the bridge arm current ($i_{arm}$) so as to generate a second signal;

(c3) adding the first signal and the second signal, thereby generating a third signal;

(c4) performing a pulse modulation on the third signal, so that the first driving signal is generated to control the plurality of full-bridge submodules (311b, 321b, 331b, 312b, 322b, 332b);

(c5) dividing the half-bridge real-time voltage ($V^*_{HB}$) by a number of the plurality of half-bridge submodules (311a, 321a, 331a, 312a, 322a, 332a) and the corresponding submodule voltage, thereby generating a fourth signal;

(c6) subtracting the original voltages ($V_{CHB,i}$) of the plurality of half-bridge submodules (311a, 321a, 331a, 312a, 322a, 332a) from a first average voltage ($\overline{V}_{CHB}$) so as to obtain a third result, performing the proportional integration on the third result so as to obtain a fourth result, and multiplying the fourth result by the bridge arm current ($i_{arm}$) so as to generate a fifth signal;

(c7) adding the fourth signal and the fifth signal, thereby generating a sixth signal; and

(c8) performing the pulse modulation on the sixth signal, so that the second driving signal is generated to control the plurality of half-bridge submodules (311a, 321a, 331a, 312a, 322a, 332a).

FIG. 1

FIG. 2A

FIG. 2B

FIG. 3

EP 4 757 160 A1

EP 4 757 160 A1

M1

Yes ⟍ If the
voltage reference value is
greater than 0? ⟋ No

M2

Yes ⟍ If the bridge arm
current is greater
than 0? ⟋ No

M5

Yes ⟍ If the bridge arm
current is greater
than 0? ⟋ No

M3

M4

M6

M7

| The half-bridge compensation voltages of the plurality of half-bridge submodules and the original voltages of the plurality of full-bridge submodules are sorted in an ascending order of numerical values, so that the operating sequence is obtained. | The half-bridge compensation voltages of the plurality of half-bridge submodules and the original voltages of the plurality of full-bridge submodules are sorted in a descending order of numerical values, so that the operating sequence is obtained. | The original voltages of the plurality of full-bridge submodules are sorted in an ascending order of numerical values, and the plurality of half-bridge submodules are bypassed, so that the operating sequence is obtained. | The half-bridge compensation voltages of the plurality of half-bridge submodules are sorted in a descending order of numerical values, and the plurality of full-bridge submodules are bypassed, so that the operating sequence is obtained. |

FIG. 4

FIG. 5

EP 4 757 160 A1

FIG. 6

FIG. 7

EP 4 757 160 A1

EP 4 757 160 A1

FIG. 8

FIG. 9

FIG. 10A

FIG. 10B

FIG. 10C

FIG. 11A

FIG. 11B

| | Europäisches Patentamt European Patent Office Office européen des brevets | **EUROPEAN SEARCH REPORT** | **Application Number** EP 25 22 0447 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG YAQIAN ET AL: "Design Analysis and Capacitance Reduction of Hybrid Modular Multilevel Converters Under Boost AC Mode", IEEE TRANSACTIONS ON POWER ELECTRONICS, vol. 38, no. 12, 1 December 2023 (2023-12-01), pages 14918-14929, XP093378657, USA ISSN: 0885-8993, DOI: 10.1109/tpel.2023.3311046 | 1-3, 6-10, 12-15 | INV. H02M7/483 H02M1/00 H02M7/5387 |
| Y | * equation 26; Section IV.A; Section V.B; figures 1,3,9a,9b; table IV * ----- | 4,5,11 | |
| Y | ZHANG JIE ET AL: "Modified capacitor voltage balancing sorting algorithm for modular multilevel converter", 1 March 2019 (2019-03-01), THE JOURNAL OF ENGINEERING THE INSTITUTION OF ENGINEERING AND TECHNOLOGY, MICHAEL FARADAY HOUSE, SIX HILLS WAY, STEVENAGE, HERTS. SG1 2AY, UK, PAGE(S) 3315 - 3319, XP006085312, | 4,5,11 | |
| A | * Section 3.2; page 3317 * ----- | 1-3, 6-10,12 | |
| | -/-- | | |

**TECHNICAL FIELDS SEARCHED (IPC)**

H02M

The present search report has been drawn up for all claims

| Place of search | Date of completion of the search | Examiner |
|---|---|---|
| The Hague | 20 March 2026 | De Riso, Monica |

EPO FORM 1503 03.82 (P04C01)

Europäisches
Patentamt

European
Patent Office

Office européen
des brevets

# EUROPEAN SEARCH REPORT

**Application Number**

EP 25 22 0447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAO NALLAMATTI POORNACHANDRA ET AL: "Analysis of Capacitor Voltage Unbalance in Hybrid MMC and Its Novel Operation With Reduced Submodule Capacitance", IEEE JOURNAL OF EMERGING AND SELECTED TOPICS IN POWER ELECTRONICS IEEE, PISCATAWAY, NJ, USA, vol. 10, no. 6, 24 June 2022 (2022-06-24), pages 7271-7284, XP011929349, ISSN: 2168-6777, DOI: 10.1109/JESTPE.2022.3186527 [retrieved on 2022-06-27] * equation 26; Section IV; column 1, line 27 - line 29; figures 1,5 * | 13,14 | |
| A | SARANGI RISABH ET AL: "Splitting of Voltage Reference Between Half-Bridge and Full Bridge Sub-modules in Hybrid MMC", 2021 IEEE ENERGY CONVERSION CONGRESS AND EXPOSITION (ECCE), 10 October 2021 (2021-10-10), pages 2640-2644, XP093379322, DOI: 10.1109/ecce47101.2021.9595724 * Section II.C; figure 1 * | 1-15 | TECHNICAL FIELDS SEARCHED (IPC) |

The present search report has been drawn up for all claims

| Place of search | Date of completion of the search | Examiner |
|---|---|---|
| The Hague | 20 March 2026 | De Riso, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)